# EUROPEAN PATENT SPECIFICATION

(11) **EP 2 818 525 B1**
(45) Date of publication and mention of the grant of the patent: **28.12.2016**
(21) Application number: 13751586.2
(22) Date of filing: 20.02.2013
(51) Int. Cl.: C09D 201/00, C09D 5/44, C09D 7/12, C09D 175/04, C08G 18/76

(54) **ELECTRODEPOSITION COATING COMPOSITION, AND CATALYST FOR ELECTRODEPOSITION COATING COMPOSITION**
ELEKTROTAUCHLACKIERUNGSZUSAMMENSETZUNG UND KATALYSATOR FÜR DIE ELEKTROTAUCHLACKIERUNGSZUSAMMENSETZUNG
COMPOSITION DE REVÊTEMENT PAR ÉLECTRODÉPOSITION ET CATALYSEUR DESTINÉ À UNE COMPOSITION DE REVÊTEMENT PAR ÉLECTRODÉPOSITION

(30) Priority: 21.02.2012 JP 2012034922
(43) Date of publication of application: 31.12.2014
(73) Proprietor: Nitto Kasei Co., Ltd., Osaka-shi Osaka 533-0031 (JP)
(72) Inventor: SASAOKA, Shinichi, Osaka-shi Osaka 533-0031 (JP); HANEDA, Hideo, Osaka-shi Osaka 533-0031 (JP); ISHIDA, Toshikazu, Osaka-shi Osaka 533-0031 (JP)
(74) Representative: Gulde & Partner
(86) International application number: PCT/JP2013/054134
(87) International publication number: WO 2013/125562

(56) References cited:
- WO-A1-2011/032837
- WO-A1-2011/098781
- JP-A- S64 167
- JP-A- H02 135 266
- JP-A- 2000 273 355
- JP-A- 2003 268 309
- JP-A- 2011 501 774
- JP-A- 2011 523 380
- US-A- 4 313 851
- US-A- 5 162 283
- US-A1- 2002 010 273
- US-A1- 2009 143 526

## Description

### TECHNICAL FIELD

The present invention relates to an organic tin-free electrodeposition coating composition which does not contain organic tin compound and can sustain a superior coating curability under currently used baking conditions, and to a catalyst contained in the composition and promotes a crosslinking reaction.

### BACKGROUND ART

In general, a coating is applied onto the surface of a metal material for protecting the material from corrosion and to maintain its beautiful appearance during its use. Here, in cases where parts such as automobiles and electrical equipments having a pocket portion are coated, electrodeposition is widely applied in primer coating since it has superior deposition property and is low in environmental pollution when compared with air spray coating and electrostatic spray coating. In particular, a cationic electrodeposition coating is widely used as a coating method for primer coating with respect to objects to be coated that are large and require high corrosion resistance such as a body of automobiles. This is since the electrodeposition coating enables sequential coating.

In general, cationic electrodeposition coating is conducted by dispersing a binder component containing a cationic resin and a curing agent in an aqueous medium containing a neutralizer such as an organic acid to give a cationic electrodeposition coating composition, followed by allowing an object to be coated be immersed in the composition as an anode, and then applying voltage.

When the voltage is applied between the electrodes during the coating process, an electrodeposition coating precipitates at the surface of the anode (object to be coated) as a result of an electro-chemical reaction. The electrodeposition coating thus formed contains the curing agent as well as the cationic resin. Accordingly, when the electrodeposition coating is baked after the electrodeposition process, the coating cures and forms a desired cured coating.

As the cationic resin used for the cationic electrodeposition coating composition, an amine-modified epoxy resin have been used in the light of corrosion resistance. As the curing agent used for the cationic electrodeposition coating composition, blocked polyisocyanate and the like, a polyisocyanate blocked with alcohol and the like for example, have been used.

In addition, in order to improve the curability, which serves as an indication of various performances of the coating, catalyst that accelerate the cross-linking reaction of the curing agent has been added. Typical catalyst used is an organic tin compound.

However, the organic tin compound may be a cause of catalyst poisoning for the deodorizing catalyst in the baking furnace of the coating line. In addition, from the current environmental regulation trend, there is a possibility that the use of organic tin compounds may be banned. Therefore, development of a cationic electrodeposition coating composition which uses a catalyst alternative to the organic tin compound has been strongly desired.

As the alternative catalyst to the organic tin compound, a cationic electrodeposition coating composition using a zinc borate, a quaternary ammonium salt of organic acid, a zinc compound or the like has been suggested (Patent Documents 1 to 3).

However, the effect of these compounds as a catalyst were insufficient, and the curability and the anticorrosion property were not practically satisfactory.

In addition, a cationic electrodeposition coating composition containing a metal chelate compound; a tetravalent organic titanium, zirconium, or hafnium complex having an oxygen-containing coordinate; and a fluoro-metal ions of zirconium or titanium; have been suggested (Patent Documents 4 to 6).

However, curability of the coating was not sufficient when these compounds were used alone, and thus the organic tin compound need be used in combination. Accordingly, there has not been known a cationic electrodeposition coating composition which does not contain organic tin compound and can sustain a superior coating curability under currently used baking conditions.

### PRIOR ART REFERENCE

### PATENT DOCUMENT

Patent Document 1: JP-A-7-331130
Patent Document 2: JP-A-11-152432
Patent Document 3: JP-A-2000-336287
Patent Document 4: JP-A-2-265974
Patent Document 5: JP-A-2011-513525
Patent Document 6: JP-A-2006-257268

### SUMMARY OF THE INVENTION

### PROBLEMS TO BE SOLVED BY THE INVENTIONS

The present invention has been made in view of such circumstances, and the object of the present invention is to provide a cationic electrodeposition coating composition which does not contain organic tin compound and can sustain a superior coating curability under currently used baking conditions.

### MEANS FOR SOLVING THE PROBLEMS

According to the present invention, an electrodeposition coating composition containing a titanium compound (A), a base resin (B), and a neutralizer (E) for dispersing the titanium compound (A) and the base resin (B) in water, wherein the titanium compound (A) is at least one type of the titanium compound represented by the following Chemical Formulas (2) to (5): 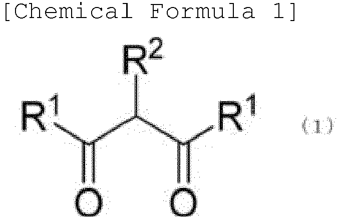 (wherein, R¹ may be the same or different from each other, and represent a hydrocarbon group, an alkoxy group, or a primary or secondary amino group; and R² represents a hydrogen atom or a hydrocarbon group) 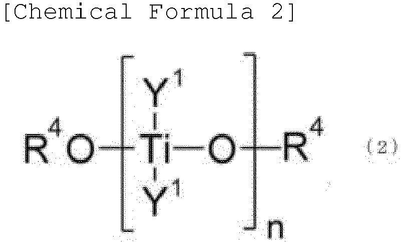 (wherein, n represents an integer of 1 to 10; Y¹ represent OR⁴ or 1,3-dicarbonylate derived from a dicarbonyl compound (a-11) of the Chemical Formula (1), number of Y¹ representing the 1,3-dicarbonylate being m (1≤m≤2n) and total number of Y¹ group being 2n; R⁴ may be the same or different from each other, and represent a hydrogen atom or a hydrocarbon group; and at least one among (2n+2-m) of the R⁴ is a hydrogen atom) 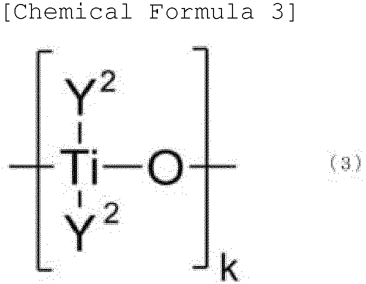 (wherein, k represents an integer of 2 or more; Y² represent a hydroxy group, an alkoxy group or 1,3-dicarbonylate derived from a dicarbonyl compound (a-11) of the Chemical Formula (1); at least one among 2k of the Y² is the 1,3-dicarbonylate; and a terminal at Ti side and a terminal at O side are bonded with each other) 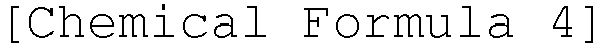 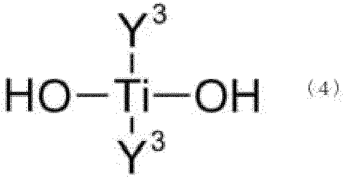 (wherein, Y³ represent a hydroxy group or 1,3-dicarbonylate derived from a dicarbonyl compound (a-11) of the Chemical Formula (1); and at least one among two of the Y³ is the 1,3-dicarbonylate) 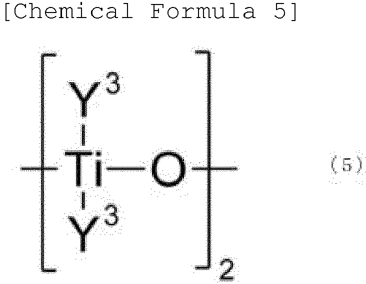 (wherein, Y³ represent a hydroxy group or 1,3-dicarbonylate derived from a dicarbonyl compound (a-11) of the Chemical Formula (1); at least one among two of the Y³ is the 1,3-dicarbonylate; and a terminal at Ti side and a terminal at O side are bonded with each other)

The present inventors have conducted an evaluation on the catalyst performance with various substances, in order to solve the afore-mentioned problems. Accordingly, the inventors have found that the afore-mentioned titanium compound (A) has an exceptionally superior characteristic, and thus have achieved the present invention.

The present inventors have prepared the titanium compound (A) by using various di-carobonyl compounds and alkoxy titanium compound, as shown in Tables 1-1 to 1-5. When the catalyst activity of these compounds were examined, all of the Examples shown in Tables 3-1 to 3-6 gave superior results.

In addition, catalyst activity of 1,3-dicarbonylate complexes of which central metal is aluminum or zirconium have been examined in order to investigate whether the catalyst activity is a specific characteristic of the titanium compound (A). As shown in Comparative Examples 1 to 4, they did not show favorable results. In addition, when the catalyst activity of titanium oxide, zinc acetate, and bismuth oxide were examined, they also did not show favorable results, as given in Comparative Examples 5 to 8.

From the above results, it became obvious that the superior catalyst activity of the titanium compound (A) was a specific characteristic of the titanium compound (A).

In addition, the stability of the titanium compound (A) in aqueous medium was investigated, and superior results were obtained as shown in Table 4.

### EFFECT OF THE INVENTION

According to the present invention, a cationic electrodeposition coating composition without the use of the organic tin compound, however still sustaining an equal or higher curability, corrosion resistance, and finishing property compared with those of the composition containing the organic tin compound, can be provided.

### DESCRIPTION OF THE PREFERRED EMBODIMENTS

Hereinafter, the present invention will be described in detail.

### Electrodeposition Coating Composition

The electrodeposition coating composition of the present invention contains a titanium compound (A) and a base resin (B).

### «Titanium Compound (A) »

The titanium compound (A) is at least one of the titanium compounds represented by the afore-mentioned Chemical Formulas (2) to (5). The manufacturing method for such titanium compound (A) is not particularly limited. Here, in one example, the titanium compound (A) can be obtained by reacting at least one type of a dicarbonyl compound (a-11) with at least one type of an alkoxy titanium compound (a-12) to give a titanium complex (a-1), followed by hydrolysis. The hydrolysis may be conducted under the presence of a metal compound (D) and/or a filler. Hereinafter, each of the constitution elements will be described in detail.

### (di-Carbonyl Compound (a-11))

The dicarbonyl compound (a-11) is a 1,3-dicarbonyl compound represented by the Chemical Formula (1). Chemical Formula (1): 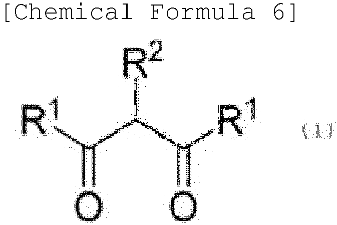 (wherein, R¹ may be the same or different from each other, and represent a hydrocarbon group, an alokoxy group, or a primary or secondary amino group; and R² represents a hydrogen atom or a hydrocarbon group)

In Chemical Formula (1), R¹ may be the same or different from each other, and represent a hydrocarbon group, an alokoxy group, or a primary or secondary amino group.

As the hydrocarbon group, for example, saturated hydrocarbon groups such as a methyl group, an ethyl group, a propyl group, an isopropyl group, a butyl group, an isobutyl group, a t-butyl group, a pentyl group, a hexyl group, a cyclohexyl group, a heptyl group, an octyl group, a dodecanyl group, an octa-decanyl group and the like; and unsaturated hydrocarbon groups such as a vinyl group, an allyl group, a prenyl group, a crotyl group, a cyclopentadienyl group, a phenyl group, a tolyl group, a xylyl group, a substituted aryl group and the like; can be mentioned. Among these, a hydrocarbon group having 1 to 12 carbon atoms is preferable, and a methyl group, a phenyl group, and a substituted aryl group is especially preferable.

As the alkoxy group, a methoxy group, an ethoxy group, a propoxy group, an isopropoxy group, a butoxy group, an isobutoxy group, a t-butoxy group, a pentyloxy group, a hexyloxy group, a heptyloxy group, an octyloxy group, a 2-ethylhexyloxy group, a nonyloxy group, a decanyloxy group, a dodecanyloxy group, a phenoxy group and the like can be mentioned. Among these, an alkoxy group having 1 to 12 carbon atoms is preferable, and a methoxy group, an ethoxy group, and a t-butoxy group is especially preferable.

As the primary or secondary amino group, a dimethylamino group, a diethylamino group, a diisopropylamino group, a phenylamino group, a methylphenylamino group, an ethylphenylamino group, a substituted arylamino group can be mentioned. Among these, a secondary amino group having 1 to 12 carbon atoms is preferable.

In Chemical Formula (1), R² represents a hydrogen atom or a hydrocarbon group. As the hydrocarbon group, for example, saturated hydrocarbon groups such as a methyl group, an ethyl group, a propyl group, an isopropyl group, a butyl group, an isobutyl group, a pentyl group, a hexyl group, a cyclohexyl group, a heptyl group, an octyl group, a dodecanyl goup, an octadecanyl group and the like; unsaturated hydrocarbon groups such as a vinyl group, an allyl group, a prenyl group, a crotyl group, a cyclopentadienyl group, a phenyl group, a benzyl group and the like; can be mentioned. Among these, a hydrogen atom, and a hydrocarbon group having 1 to 12 carbon atoms is preferable, and a hydrogen atom is especially preferable.

As the dicarbonyl compound (a-11), for example, diketones such as 2,4-pentanedione, 2,4-hexanedione, 2,4-pentadecanedione, 2,2,6,6-tetramethyl-3,5-heptanedione, 1-aryl-1,3-butanediones such as 1-phenyl-1,3-butanedione and 1-(4-methoxyphenyl)-1,3-butanedione, 1,3-diaryl-1,3-propanediones such as 1,3-diphenyl-1,3-propanedione, 1,3-bis(2-pyridyl)-1,3-propanedione, and 1,3-bis(4-methoxyphenyl)-1,3-propanedione, and 3-benzyl-2,4-pentanedione; keto esters such as methyl acetoacetate, ethyl acetoacetate, butyl acetoacetate, t-butyl acetoacetate, and ethyl-3-oxo-hexanoate; keto amides such as N,N-dimethyl acetoacetamide, N,N-diethyl acetoacetamide, and acetoacetanilide; malonic acid esters such as dimethyl malonate, diethyl malonate, and diphenyl malonate; malonic acid amides such as N,N,N',N'-tetramethyl malonamide, and N,N,N',N'-tetraethyl malonamide; can be mentined. Among these, diketones such as 2,4-pentanedione, 1-aryl-1,3-butanediones, and 1,3-diaryl-1,3-propanediones are especially preferable.

### (Alkoxy Titanium Compound (a-12))

The alkoxy titanium compound (a-12) is a titanium compound represented by the following Chemical Formula (6). Chemical Formula (6): 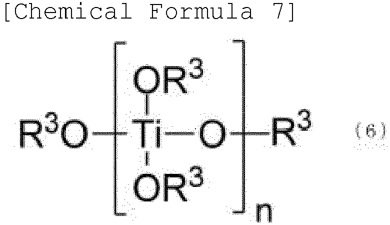 (wherein, R³ may be the same or different from each other, and represent a hydrocarbon group; and n represents an integer of 1 to 10)

In the Chemical Formula (6), R³ may be the same or different from each other, and represent a hydrocarbon group. As the hydrocarbon group, for example, saturated hydrocarbon groups such as a methyl group, an ethyl group, a propyl group, an isopropyl group, a butyl group, an isobutyl group, a t-butyl group, a pentyl group, a hexyl group, a cyclohexyl group, a heptyl group, an octyl group, a 2-ethylhexyl group; and unsaturated hydrocarbon groups such as a vinyl group, an allyl group, a prenyl group, a crotyl group, a cyclopentadienyl group, and a phenyl group can be mentioned. Among these, a hydrocarbon group having 1 to 8 carbon atoms is preferable, and an isopropyl group and a butyl group are especially preferable. In the Chemical Formula (6), n represents an integer of 1 to 10, preferably 1 to 7, and especially preferably 1 to 4.

As the alkoxy titanium compound (a-12), for example, titanium tetramethoxide, titanium tetraethoxide, titanium tetrapropoxide, titanium tetraisopropoxide, titanium tetrabutoxide, tetrakis (2-ethylhexyloxy) titanium, titanium tetrabutoxide dimer, titanium tetrabutoxide tetramer, titanium tetrabutoxide heptamer, and titanium tetrabutoxide decamer can be mentioned. Among these, tetraisopropoxy titanium, tetrabutoxy titanium, titanium tetrabutoxide dimmer, and titanium tetrabutoxide tetramer are especially preferable.

### <Titanium Complex (a-1)>

The titanium complex (a-1) is obtained by allowing at least one type of a dicarbonyl compound (a-11) to react with at least one type of an alkoxytitanium compound (a-12).

The reaction molar ratio of the dicarbonyl compound (a-11) / alkoxytitanium compound (a-12) is not particularly limited, and is for example 1 to 30, preferably 1 to 2n, and more preferably 2 to 2n. In the present reaction, up to 1 mole of the dicarbonyl compound (a-11) can be allowed to react with 1 mole of the OR³ group in the alkoxytitanium compound (a-12), and 1,3-dicarbonylate forms a bond with the titanium atom while R³OH eliminates.

The number of alkoxy groups contained in the alkoxytitanium compound (a-12) is 2n+2, and under normal reaction conditions, the number of the alkoxy group being substituted by the 1,3-dicarbonylate is 2n. Accordingly, the titanium complex (a-1) is represented by the followng Chemical Formula (7). 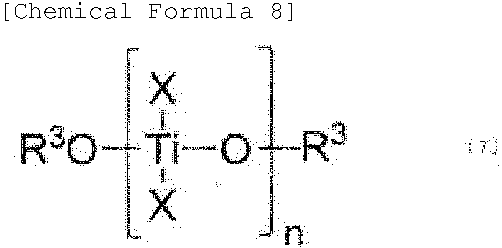 (wherein, n represents an integer of 1 to 10; X represent OR³ or 1,3-dicarbonylate derived from the dicarbonyl compound (a-11) represented by the Chemical Formula (1); at least one among 2n of the X represents the 1,3-dicarbonylate; and R³ may be the same or different from each other, and represents a hydrocarbon group)

It is preferable that one or more of the alkoxy group is substituted with the 1,3-dicarbonylate, at each of the titanium atoms. It is further preferable that two alkoxy groups are substituted with the 1,3-dicarbonylates, at each of the titanium atoms. The 1,3-dicarbonylates that coordinate with each of the titanium atoms may be the same or may be different from each other.

There is no particular limitation for the type of the reaction. It may be a reaction of any type, for example, a batch type, a continuous type, and the like. In the case of the batch type, for example, the alkoxytitanium compound (a-12) may be provided in a reactor, followed by dropwise addition of the dicarbonyl compound (a-11) during agitation. Otherwise, the dicarbonyl compound (a-11) may be provided in the reactor, followed by dropwise addition of the alkoxytitanium compound (a-12) during agitation. In addition, the dicarbonyl compound (a-11) and the alkoxytitanium compound (a-12) may be added dropwise to the reactor simultaneously during agitation. After the dropwise addition, the reaction may be completed by further agitaion of the reaction mixture at an appropriate temperature. During the reaction, solvents may be used if necessary. There is no particular limitation as to the solvents that can be used, and hydrocarbon solvents such as hexane, cyclohexane, heptane, toluene, and xylene; ether solvents such as diethylether, dibutylether, t-butylmethylether, tetrahydrofuran, dioxiane, and cyclopentylmethylether; ester solvents such as ethyl acetate and butyl acetate; ketone solvents such as acetone, methylethylketone, and methylisobutylketone; cellosolve solvents such as ethylcellosolve, butylcellosolve, and diethyleneglycol monobutylether; alcohol solvents such as methanol, ethanol, isopropanol, n-propanol, n-butanol, and ethyleneglycol; amide solvents such as DMF; and sulfoxide solvents such as DMSO, can be mentioned for example.

There is no particular limitation with the reaction temperature, and is generally 0°C to 200°C, preferably 20°C to 120°C. The reaction time is not particularly limited since it is determined based on the degree of the consumption of the dicarbonyl compound (a-11) and the amount of the generated R³OH. In general, the dicarbonyl compound (a-11) and the alkoxytitanium compound (a-12) are mixed and agitated, and then the reaction is allowed to proceed at the afore-mentioned appropriate temperature for 5 minutes to 24 hours, preferably 15 minutes to 6 hours. Then, in order to terminate the reaction, the reaction mixture is condensed under atmospheric pressure or under reduced pressure, and the R³OH generated is distillated out of the reaction system.

The titanium complex (a-1) is obtained as a condensed matter of the afore-mentnioned reaction system. The titanium complex (a-1) thus obtained can be used as it is, or can be purified by distiallation, recrystallization, reprecipitation, and the like, if necessary.

### «Titanium Compound (A) »

The titanium compound (A) can be otained by allowing at least one type of the titanium compound (a-1) to react with water. The titanium compound (A) functions as a crosslinking catalyst. This reaction between the titanium complex (a-1) and water may be conducted under the presense of the metal compound (D) and/or a filler.

The titanium compound (A) is obtained preferably by allowing 1 mole of the titanium complex (a-1) to react with 1 or more mole of water. The amount of water used in the reaction is, for example, 1 to 100 mole, preferably 2 to 50 mole with respect to one mole of the titanium complex (a-1). When the amount of water is excessive, the yield of the titanium compound (A) or the yield per unit volume would decrease, and thus it would be uneconomical.

The hydrolysis promoted by the reaction between the titanium complex (a-1) and water results in the substitution of the alkoxy group with the hydroxy group. In the Chemical Formula (7), when the number of X being the 1,3-dicarbonylate is m (the total number of X being 2n), the number of the alkoxy group would be 2n+2-m. These alkoxy groups are totally or partly substituted with the hydroxy groups. Accordingly, the reaction product of the titanium complex (a-1) with water is represented by the following Chemical Formula (2). 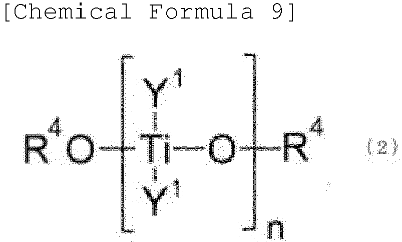 (wherein, n represents an integer of 1 to 10; Y¹ represent OR⁴ or 1,3-dicarbonylate derived from a dicarbonyl compound (a-11) of the Chemical Formula (1); the number of Y¹ representing the 1,3-dicarbonylate is m (1≤m≤2n), the total number of Y¹ being 2n; R⁴ may be the same or different from each other, and represent a hydrogen atom or a hydrocarbon group; and at least one among (2n+2-m) of the R⁴ is a hydrogen atom)

The example of the hydrocarbon groups for R⁴ is the same as R³.

The compound represented by Chemical Formula (2) may exist stabley as the original titanium compound (A), however, when at least one of a terminal alkoxy groups is substituted with a hydroxy group, the terminals may become bonded with each other through dehydration reaction or dealcohol reaction. In addition, the Ti-O bond of the Ti-O chain may be broken by the hydrolysis before the dehydration reaction or the dealcohol reaction, which results in the change in the nuber of Ti atom. Therefore, the titanium compound (A) may have a structure represented by the following Chemical Formula (3). Here, the terminal at Ti side and the terminal at O side are bonded with each other in Chemical Formulas (3), (3-1), (5), (5-1), and (5-2). 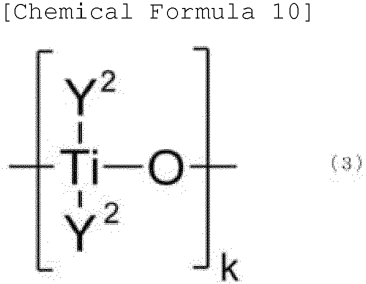 (wherein, k represents an integer of 2 or more; Y² represent a hydroxy group, an alkoxy group or 1,3-dicarbonylate (a-11) derived from a dicarbonyl compound of the Chemical Formula (1); at least one among 2k of the Y² is the 1,3-dicarbonylate)

When all of the Y² (the total number of Y² being 2k) are 1,3-dicarbonylate, the titanium compound (A) has a structure as represented by Chemical Formula (3-1). 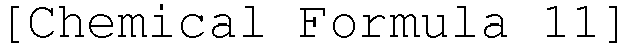 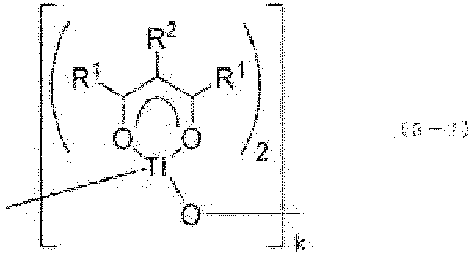 (wherein, k represents an integer of 2 or more; and R¹ and R² are defined as in Chemical Formula (1))

When a large amount of water is used to allow the hydrolysis to proceed fully, the Ti-O bond in the Ti-O chain is broken. Then the number of Ti atom contained in the titanium compound (A) becomes 1, and all of the alkoxy groups would be substituted with hydroxy groups. Accordingly, the titanium compound (A) would be represented by the Chemical Formula (4). 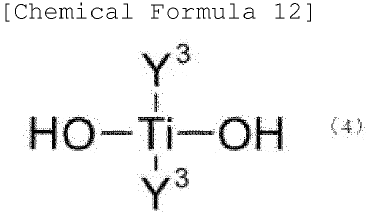 (wherein, Y³ represent a hydroxy group or 1,3-dicarbonylate derived from a dicarbonyl compound (a-11) of the Chemical Formula (1); and at least one among two of Y³ is the 1,3-dicarbonylate)

The structure represented by the Chemical Formula (4) may be unstable, and in such case, dehydration reaction occurs and forms a dimer represented by the Chemical Formula (5). 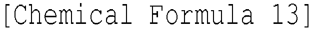 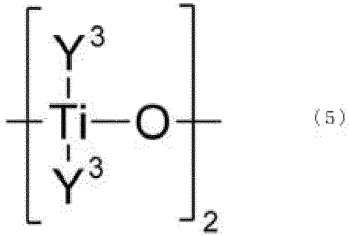 (wherein, Y³ represent a hydroxy group or 1,3-dicarbonylate derived from a dicarbonyl compound (a-11) of the Chemical Formula (1); and at least one among two of Y³ is the 1,3-dicarbonylate)

When all of the Y³ are 1,3-dicarbonylate, the structure is as represented by the Chemical Formula (5-1). 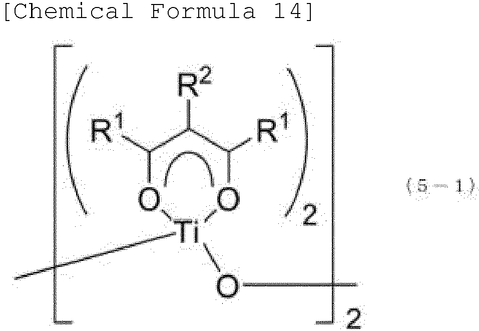 (wherein, R¹ and R² are defined as in Chemical Formula (1))

In addition, when acetylacetone is used as the dicarbonyl compound (a-11), the structure is as represented by the Chemical Formula (5-2).

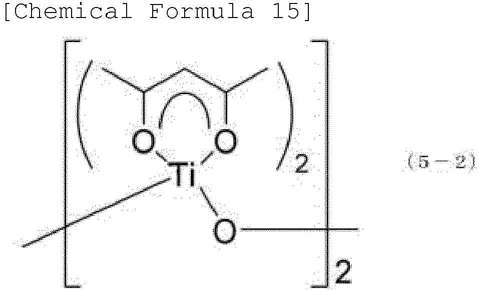

When the hydrolysis reaction by the titanium complex (a-1) and water proceeds fully, the titanium compound (A) would be a single compound represented by the Chemical Formula (5). Here, when obtaining a titanium compound (A) which functions as the catalyst, it is not necessary to have the hydrolysis proceed fully, and the hydrolysis may proceed partially. In such case, the titanium compound (A) is a mixuture of compounds represented by Chemical Formulas (2) to (5). A particular compound may be isolated from the mixture and used as the catalyst, or the mixture may be used as it is as the catalyst. In either case, the titanium compound (A) function as the catalyst.

In addition, the hydrolysis reaction of the titanium complex (a-1) may be conducted in the presense of a metal compound (D) and/or a filler. In such case, the titanium complex (a-1) and the metal compound (D) and/or a filler may be mixed before or during the hydrolysis reaction. Accordingly, a composite catalyst containing the titanium compound (A) and the metal compound (D) and/or a filler can be obtained. The hydrolysis of the titanium complex (a-1) conducted in the presence of the metal compound (D) and/or a filler is called "co-existing hydrolysis".

As the metal compound (D), various metal compounds mentioned in the following section "«Metal Compound (D)>>" can be used. As the filler, filler which do not affect electrodeposition and/or filler with superior dispersibility used in pigment catalyst dispersion paste can be used. For example, inorganic fillers such as silica, kaolinite, kaolin, purified clay, and synthetic hydrotalcite can be mentioned. Otherwise, by trade name, Sillitin Z86, Sillitin Z89, and Sillikolloid P87 available from HOFFMANN MINERAL GmbH; AEROSIL (registered trademark) 200 and AEROSIL (registered trademark) 300 available from Evonic Industries; and Hydrite PXN available from Georgia Kaolin Co., can be mentioned. In addition, orgaic fillers such as cellulose and cellulose acetate can be used. The average particle diameter of the filler is, for example, 0.1 to 20µm, preferably 0.3 to 10µm, more preferably 0.5 to 5µm. The amount of filler formulated is, for example, 0.1 to 30 parts by mass, preferably 0.5 to 20 parts by mass, and more preferably 1 to 10 parts by mass with respect to 100 parts by mass of the titanium complex (a-1).

In addition, when the stability of the pigment catalyst dispersion paste prepared by mixing the titanium compound (A) obtained by hydrolysis of the titanium complex (a-1) and the metal compound (D) is compared with that of the pigment catalyst dispersion paste prepared by using a composite catalyst of titanium compound (A) obtained by hydrolysis of the titanium complex (a-1) in the presence of the metal compound (D), the latter showed superior stability, as shown in Tables 5 to 6. The reason for the improvement in stability is not clear. Here, it is assumed that the reaction of the metal compound (D) is supressed in the paste since the surface of the metal compound (D) is coated with the titanium compound (A), which contributes to the improvement in the stability.

In addition, the pigment catalyst dispersion paste prepared by using the composite catalyst of titanium compound (A) obtained by hydrolysis of the titanium complex (a-1) in the presence of the metal compound (D) and the filler was found to have further superior stability.

There is no particular limitation for the type of the reaction. It may be a reaction of any type, for example, a batch type, a continuous type, and the like. In the case of the batch type, for example, the titanium complex (a-1) may be provided in a reactor, followed by dropwise addition of water during agitation. Otherwise, water may be provided in the reactor, followed by dropwise addition of the titanium complex (a-1) during agitation. After the dropwise addition, the reaction may be completed by further agitaion of the reaction mixture. During the reaction, solvents other than water may be used, or solvents other than water may be added to the reaction mixture after the completion of the reacition, if necessary. In addition, the reaction may be carried out in an aqueous medium containing the base resin (B) and the like which does not get involved in the reaction.

There is no particular limitation with respect to the solvent used, and alcohol solvents such as methanol, ethanol, isopropanol, n-propanol, n-butanol, and ethyleneglycol; hydrocarbon solvents such as hexane, cyclohexane, heptane, toluene, and xylene; ether solvents such as diethylether, dibutylether, t-butylmethylether, tetrahydrofuran, dioxane, and cyclopentyl methylether; ester solvents such as ethyl acetate and butyl acetate; ketone solvents such as acetone, methylethylketone, and methylisobutylketone; cellosolve solvents such as ethylcellosolve, butylcellosolve, and diethyleneglycol monobutylether; amide solvents such as DMF; and sulfoxide solvents such as DMSO, can be mentioned for example. There is no particular limitation with respect to the reaction temperature, so long as the water does not solidify, and the reaction is generally carried out in the temperature range from 0°C to the reflux temperature of the solvent. There is no limitation with respect to the reaction time, and is generally 5 minutes to 24 hours, preferably 15 minutes to 6 hours, after 1 mole of water is allowed to react with 1 mole of the titanium complex (a-1).

The titanium compound (A) or its composite catalyst can be obtained by either one of the processes of:
condensing the reaction mixture to dryness; separating the solid product obtained by the reaction by filtration or centrifugation, followed by drying; adding to the reaction mixture a poor solvent which dissolves the titanium compound (A) by a low degree, and then separating the precipitated solid product by filtration or centrifugation, followed by drying; extracting the reaction mixture with a solvent, followed by condensing of the extraction to dryness; and the like. The titanium compound (A) or its composite catalyst obtained can be used as obtained, or can be purified by washing with solvent, recrystallization, reprecipitation and the like, as necessary.

There is no limitation with respect to the content of the titanium compound (A) contained in the electrodeposition coating composition of the present invention, and is generally 0.5 to 10 parts by mass, preferably 1.0 to 7.0 parts by mass with respect to 100 parts by mass of the total solids of the base resin (B) and the curing agent (C) contained in the electrodepsition coating composition. The coating performance is not particularly affected even when the amount of addition is not in the afore-mentioned range, however, when the amount of addition is in the range of the afore-mentioned 0.5 to 10 parts by mass, the balance of properties required for the practical usage such as the curability, corrosion resistance, stability of the electrodeposition coating become preferable.

If necessary, the electrodeposition coating composition of the present invention may be added with a curing agent (C), a metal compound (D), a neutralizer (E), and other additives and the like, in addition to the afore-mentioned titanium compound (A) and the base resin (B).

### << Base Resin (B)>>

As the base resin (B), any one of the epoxy type, acryl type, polybutadiene type, alkyd type, and polyester type may be used by introducing a cationic group. Among these, polyamine resin represented by amine-adducted epoxy resin is preferable.

As the afore-mentioned amine-adducted epoxy resin, (1) adduct of polyepoxide compound with primary monoamine and polyamine, secondary monoamine and polyamine, or mixture of primary and secondary polyamines (for example, refer to specification of US patent No. 3,984,299); (2) adduct of polyepoxide compound with secondary monoamine and polyamine having a primary amino group converted into ketimine (for example, refer to US patent No. 4,017,438); (3) reactant obtained by etherification of an polyepoxide compound and a hydroxy compound having a primary amino group converted into ketimine (for example, refer to Japanese Patent Application Publication No. S59-43013); and the like can be mentioned.

The polyepoxide compound used in the preparation of the afore-mentioned amine-adducted epoxy resin is a compound having at least two epoxy groups in one molecule. In general, the ones having a number average molecular weight of at least 200, preferably 400 to 4000, and more preferably 800 to 3000 are suitable. In particular, the one obtained by the reaction between a polyphenol compound and epichlorohydrin is preferable.

As the polyphenol compound used in the formation of the afore-mentioned polyepoxide compound, 2,2-bis(4-hydroxyphenyl)propane, 1,1-bis(4-hydroxyphenyl)ethane, 1,1-bis(4-hydroxyphenyl)isobutane, 2,2-bis(4-hydroxy-t-butylphenyl)propane, 4,4-dihydroxybenzophenone, bis(2,4-dihydroxyphenyl)methane, bis(2-hydroxynaphtyl)methane, 1,5-dihydroxynaphthalene, 4,4-dihydroxydiphenylsulphone, phenol novolac, cresol novolac and the like can be mentioned.

The afore-mentioned polyepoxide compound may be allowed to partially react with polyol, polyetherpolyol, polyesterpolyol, polyamidoaminde, polycarboxylic acid, polyisocyanate compound, and the like. In addition, the afore-mentioned polyepoxide compound may further be subjected to graft polymerization with ε-caprolactone, acryl monomer and the like.

The base resin (B) may be either type of an externally cross-linking type or an internally (or self) cross-linking type. A cross-linking reaction requires a cross-linking portion and an active hydrogen containing portion which reacts with the cross-linking portion (for example, amino group, hydroxy group). Accordingly, when both of the cross-linking portion and the active hydrogen containing portion are contained in the base resin (B), it is an internally corss-linking type, and when only one of these portions are included in the base resin (B), it is an externally cross-linking type.

As the internally cross-linking type, a base resin (B) having a blocked isocyanate group and the like in its molecule can be mentioned. The blocked isocyanate group can be incorporated in the base resin (B) by a conventional method. For example, a free isocyanate group of a partially-blocked polyisocyanate compound can be allowed to react with the active hydrogen containing portion of the base resin.

In general, from the viewpoint of the cost performance of the coating, the combination which uses an amine-adducted epoxy resin having an active hydrogen group such as hydroxy group or amino group as the base resin (B), and a blocked isocyanate as the curing agent (C), is widely used in the field of automobile bodies and the like, which are large in size and require high corrosion resisitance.

### <<Curing Agent (C)>>

When the base resin (B) is the externally cross-linking type resin, examples of the curing agent (C) used in combination are a cross-linking agent having a cross-linking portion (for example, a blocked polyisocyanate compound), and a compound having an active hydrogen containing portion (for example, a resin containing an amino group, a hydroxy group and the like). In particular, when the base resin (B) contains an active hydrogen containing portion, it is preferable to use a cross-linking agent as the curing agent, and when the base resin (B) contains a cross-linkig portion, it is preferable to use a compound having an active hydrogen containing portion as the curing agent.

The blocked polyisocyanate compound can be obtained by allowing stoichiometric amounts of polyisocyanate compound and isocyanate blocking agent to go under an addition reaction.

As the polyisocyanate compound, aromatic compounds such as tolylene diisocyanate, xylylene diisocyanate, phenylene diisocyanate, bis(isocyanatemethyl) cyclohexane, tetramethylene diisocyanate, hexamethylene diisocyanate, methylene diisocyanate, isophorone diisocyanate, polymethylene polyphenyl polyisocyanate; or aliphatic polyisocyanate compounds; and isocyanate terminated compounds obtained by allowing excess amount of these isocyanate compounds with low molecular compounds having active hydrogen (example: ethylene glycol, propylene glycol, trimethylolpropane, hexanetriol and castor oil), can be mentioned.

As the isocyanate blocking agent, the ones that adds to the isocyanate group of the polyisocyanate compound to block the isocyanate group is preferable. Here, the obtained blocked polyisocyanate compound should be stable under ambient temperature and release the blocking agent when heated to 100 to 200°C to regenerate the isocyanate group.

As the blocking agent, halogenated hydrocarbons such as 1-chloro-2-propanol and ethylene chlorohydrin; heterocyclic alcohols such as furfuryl alcohol and alkyl group substituted furfuryl alcohol; phenols such as phenol, m-cresol, p-nitrophenol, p-chlorophenol, and nonylphenol; oximes such as methylethyl ketone oxime, methyl isobutyl ketone oxime, acetone oxime, and cyclohexanone oxime; active methylene compounds such as acetylacetone, ethyl acetoacetate and diethyl malonate; lactams such as ε-caprolactam; aliphatic alcohols such as methanol, ethanol, n-propanol, isopropanol, and 2-ethylhexanol; aromatic alcohols such as benzyl alcohol; and glycol ethers such as ethylene glycol monomethyl ether, ethylene glycol monoethyl ether, ethylene glycol monobutyl ether, diethylene glycol monomethyl ether, and diethylene glycol monobutyl ether; can be mentioned for example.

The dissociation temperatures of the blocking agents for alcohols and glycol ethers are higher than those for oximes, acitive methylene compounds, and lactams. However, alocohols and glycol ethers are inexpensive compared with other blocking agents. Therefore, they are generally used in the field of automobile bodies and the like, which are large in size and require economical efficiency.

The mass ratio of solids of the base resin (B) / curing agent (C) is preferably 20/80 to 90/10, more preferably 30/70 to 80/20.

### <<Metal Compound (D)>>

As the metal compound (D), at least one type of compound selected from the group consisting of magnesium, aluminum, calcium, iron, copper, zinc, and bithmus can be mentioned for example.

As the magnesium compound, carboxylic acid salts such as magnesium acetate and magnesium lactate; and chelate complexes such as bis(2,4-pentanedionato) magnesium (II) can be mentioned for example.

As the aluminum compound, phosphoric acid salts such as aluminum polyphosphate; and chelate complexes such as tris(2,4-pentanedionato) aluminum (III) can be mentioned for example.

As the calcium compound, carboxylic acid salts such as calcium acetate; and chelate complexes such as bis(2,4-pentanedionato) calcium (II) can be mentioned for example.

As the iron compound, carboxylic acid salts such as iron (III) tris(2-ethylhexanoate); and chelate complexes such as tris(2,4-pentanedionato) iron (III), tris(1,3-diphenyl 1,3-propanedionato) iron (III) can be mentioned for example.

As the copper compound, carboxylic acid salts such as copper acetate, copper lactate, and copper benzoate; and chelate complexes such as bis(2,4-pentanedionato) copper (II) can be mentioned for example.

As the zinc compound, carboxylic acid salts such as zinc acetate, zinc lactate, zinc dimethylol propionate, and zinc benzoate; and chelate complexes such as bis(2,4-pentanedionato) copper (II) can be mentioned for example.

As the bismuth compound, bismuth oxides such as Bi₂O₃; bismuth hydroxides such as Bi(OH)₃; carboxylic acid salts such as basic bismuth nitrate
4(Bi(NO₃) (OH)₂) (BiO(OH)), bismuth acetate (CH₃CO₂)₃Bi, bismuth acetate oxide CH₃CO₂BiO, bismuth methoxyacetate (CH₃OCH₂CO₂)₃Bi, bismuth methoxyacetate oxide CH₃OCH₂CO₂BiO, bismuth succinate oxide OBiO₂CCH₂CH₂CO₂BiO, and bismuth lactate; sulfonic acid salts such as bismuth p-toluene sulfonate; and chelate complexes such as tris(2,4-pentanedionato) bismuth(III) and (2,4-pentanedionato) bismuth (III) oxide can be mentioned for example.

Among the afore-mentioned metal compounds (D), bismuth oxides, bismuth hydroxides, (2,4-pentanedionato) bismuth (III) oxide, bismuth carboxylate oxides, iron chelate complexes and copper chelate complexes are particularly preferable, when curability and availability of the raw materials are taken into consideration. These metal compounds may be used alone, or two or more of the compounds may be used in combination.

There is no particular limitation with respect to the content of the metal compound D in the electrodeposition coating composition of the present invention, and is generally 5 to 300 parts by mass, preferably 10 to 100 parts by mass with respect to 100 parts by mass of the titanium compound (A). When the content is in the afore-mentioned range, curability can be improved.

### <<Neutralizer (E)>>

The electrodeposition coating composition of the present invention further contains a neutralizer (E) for dispersing the afore-mentioned components in water. As the neutralizer (E), aliphatic carboxylic acids such as acetic acid, formic acid, propionic acid, and lactic acid can be mentioned for example. The amount of the neutralizer (E) differs depending on the amount of the amino group in the base resin (B), and should be sufficient for dispersing the components in water and capable of maintaining the pH value of the electrodeposition coating in the range of 3.0 to 9.0. In the present invention, the equivalent amount of the neutralizer (E) necessary for neutralizing the amino group contained in the base resin (B) is in the range of 0.25 to 1.5, preferably 0.5 to 1.25. When the amount is in such range, the finishing property, attaching property, and the curability at low temperature improve.

### <<Other Additives>>

The electrodeposition coating composition of the present invention may further contain common additives used in coatings, such as a coloring pigment, an extender pigment, an organic solvent, a pigment dispersant, a coating surface conditioner, a surfactant, an antioxidant, and an ultraviolet absorber.

### Manufacutring Process of Electrodeposition Coating Composition

The electrodeposition coating composition of the present invention is manufactured by mixing the afore-mentioned components at once, however, it can also be manufactured by the following process.

For example, the base resin (B) is mixed with the curing agent (C), followed by the addition of the neutralizer (E). The mixture of the base resin (B), curing agent (C), and neutralizer (E) is dispersed in water alone or in a mixture of water and hydrophilic organic solvent as an aqueous medium to give an emulsion. Alternatively, the base resin (B) and the curing agent (C) are mixed, and then the mixture is dispersed in an aqueous solution added with the neutralizer (E) or in the solution mixture of water and hydrophilic organic solvent added with the neutralizer (E), to give the emulsion.

Separately, to a mixture of the base resin (B) and water or water with hydrophilic organic solvent, neutralizer (E) is added and mixed to give a homogeneous solution. Then, the titanium compound (A) or its composite catalyst, other additives, pigments, pigment dispersant and the like are added by a predetermined amount, followed by mixing. Subsequently, the solids contained in the mixture is dispersed so as to reach a certain particle diameter or smaller, by using a general dispersing device such as a ball mill and a sand mill. Accordingly, the pigment catalyst dispersion paste is obtained.

Lastly, the emulsion and a predetermined amount of the pigment catalyst dispersion paste are throughouly mixed to give the electrodeposition coating composition.

### Coating Process of Electrodeposition Coating Composition

The electrodeposition coating composition of the present invention can be coated on the surface of the intended substrate by electrodeposition.

Electrodeposition is generally carried out by diluting the electrodeposition coating composition with deionized water so that the solid content of the composition is approximately 5 to 40 mass%, followed by adjustment of the pH value of the composition to 3.0 to 9.0. The electrodeposition coating bath prepared as such, containing the electrodeposition coating composition of the present invention, is generally adjusted to a bath temperature of 15 to 45 °C, and the electrodeposition is conducted with a load voltage of 100 to 400V.

There is no limitation with respect to the film thickness of the electrodeposition coating formed by using the electrodeposition coating composition of the present invention, and is generally 5 to 40µm, preferably 10 to 30µm, by the cured coating. Here, the baking temperature of the coating at the surface of the coated material is generally 100 to 200°C, preferably 140 to 180°C. In addition, the baking hour is 5 to 60 minutes, preferably 10 to 30 minutes. It is preferable that the surface of the coated material is maintained.

### EXAMPLE

Hereinafter, the present invention will be exaplained in detail with reference to Examples. The present invention shall not be limited to these Examples. Here, "parts" and "%" mean "parts by mass" and "masts%", respectively.

### <Preparation of Titanium Compound (A)>

### Preparative Example 1

Under nitrogen atmosphere, to a 1 liter four-necked round-bottom flask equipped with a stirring apparatus, a thermometer, and a cooler, tetraisopropoxy titanium (248.5g, 0.874 mol) was added. Then, while stirring, 2,4-pentanedione (87.5g, 0.874 mol) was added in a dropwise manner for 1 hour in an internal temperature range of 20 to 30°C. The mixture was further stirred for 6 hours in the same temperature range. The reaction mixture was then subjected to condensation under reduced pressure (temperature of the water bath : 50°C, final decompression degree : 14 mmHg) to distill isopropanol, thereby obtaining distillate (52g) and the titanium complex (a-1) as a reddish concentrate (283g) remaining in the 1 liter round-bottom flask. To the flask containing the concentrate, THF (205g) was added, followed by stirring to obtain a homogeneous solution. While stirring, deionized water (48g, 2.66 mol) was added in a dropwise manner for 1 hour in an internal temperature range of 20 to 35°C. The mixture was further stirred for 1 hour in the temperature range of 28 to 30°C. The reaction mixture was then subjected to condensation under reduced pressure (temperature of the water bath : 50°C, final decompression degree : 130 mmHg), thereby obtaining distillate (202g). To the flask containing the concentrate, hexane (675g) was added for 30 minutes in a dropwise manner while stirring, at an internal temperature range of 20 to 30°C. The mixture was further stirred for 1 hour at the same temperature range. The resulting slurry solution was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (115.0g). The titanium content obtained by analyzing the resulting yellow solid titanium compound (A) by ICP emission analyzing device was 30.7%.

### Preparative Examples 2 to 16

The type and amount of the dicarbonyl compound (a-11), the type and amount of the alkoxy titanium compound (a-12), the amount of water and solvent were changed, and the titanium compound (A) was obtained in a similar manner as Preparative Example 1. The results are shown in Tables 1-1 to 1-3. In the manufacturing step of the titanium complex (a-1), the Preparative Examples referring THF as the reaction solvent was conducted by dissolving the dicarbonyl compound (a-11) in THF before conducting the dropwise addition. In Preparative Example 12, the dicarbonyl compound (a-11) was dissolved in a solvent mixture of THF (150g) and toluene (150g) before conducting the dropwise addition.

### Preparative Example 17

Under nitrogen atmosphere, to a 500 ml Erlenmyer flask, 2,4-pentanedione (30.0g, 0.30 mol) and 1,3-diphenyl-1,3-propanedione (67.2g, 0.30 mol), and THF (216g) were added, and the reaction mixture was stirred to obtain a uniform solution. Separately, under nitrogen atmosphere, to a 1 liter four-necked round-bottom flask equipped with a stirring apparatus, a thermometer, and a cooler, tetraisopropoxy titanium (85.4g, 0.30 mol) was added. Then, while stirring, THF solution of 1,3-dicarbonyl compound prepared beforehand was added in a dropwise manner for 1 hour in an internal temperature range of 20 to 68°C. The mixture was allowed to relux by heating with an oil bath of 80°C for 2 hours. The reaction mixture was then cooled to 30°C, and was transferred into a 1 liter eggplant-shaped flask, followed by condensation under reduced pressure using a rotary evaporator to distill THF and isopropanol. Accordingly, the titanium complex (a-1) was obtained as an orange solid (144g). Then, THF (408g) was added to the solid to dissolve the solid titanium complex. Separately, to a 2 liter four-necked round-bottom flask equipped with a stirring apparatus, a thermometer, and a cooler, the THF solution of the afore-mentioned titanium complex prepared beforehand was added. Then, while stirring, deionized water (36g, 2.0 mol) was added in a dropwise manner for 30 minutes in an internal temperature range of 25 to 35°C.

The reaction mixture was then heated to an internal temperature range of 50 to 53°C, and was stirred for 2 hours. While maintaining the heating and stirring, the reaction mixture was subjected to condensation under reduced pressure (final decompression degree : 250 mmHg) to give the distillate (410g). While stirring the flask containing the concentrate, heptane (750g) was added in a dropwise manner for 1 hour in an internal temperature range of 20 to 30°C. The reaction mixture was further stirred for 1 hour in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 5 hours, thereby obtaining dry yellow solid (88.0g). The titanium content obtained by analyzing the resulting yellow solid titanium compound (A) by ICP emission analyzing device was 15.6%.

### Preparative Example 18

To a 1 liter four-necked round-bottom flask equipped with a stirring apparatus, a thermometer, and a cooler, reaction product of tetraisopropoxy titanium and 2,4-pentanedione (20.4g, 0.063 mol) obtained as the titanium complex (a-1) in Preparative Example 1, reaction product of tetraisopropoxy titanium and 1,3-diphenyl-1,3-propanedione (38.6g, 0.063 mol) obtained as the titanium complex (a-1) in Preparative Example 5, and THF (288g) were added, and the mixture was stirred to dissolve the components. Then, while stirring, deionized water (5.4g, 0.30 mol) was added in a dropwise manner for 5 minutes in an internal temperature range of 25 to 35°C. The mixture was further stirred for 3 hours in the temperature range of 28 to 30°C. While stirring and heating with a water bath of 50°C, the reaction mixture was subjected to condensation under reduced pressure (final decompression degree : 200 mmHg) to give the distillate (280g). While stirring the flask containing the concentrate, hexane (490g) was added in a dropwise manner for 1 hour in an internal temperature range of 20 to 30°C. The reaction mixture was further stirred for 2 hours in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 6 hours, thereby obtaining dry yellow solid (38.0g). The titanium content obtained by analyzing the resulting yellow solid titanium compound (A) by ICP emission analyzing device was 13.2%.

### Preparative Example 19

Under nitrogen atmosphere, to a 1 liter four-necked round-bottom flask equipped with a stirring apparatus, a thermometer, and a cooler, tetraisopropoxy titanium (142.2g, 0.50 mol) was added. Then, while stirring, 2,4-pentanedione (50.0g, 0.50 mol) was added in a dropwise manner for 1 hour in an internal temperature range of 20 to 30°C. The mixture was further stirred for 6 hours in the same temperature range. The reaction mixture was then subjected to condensation under reduced pressure (temperature of the water bath : 50°C, final decompression degree : 14 mmHg) to distill isopropanol, thereby obtaining distillate (30g) and the titanium complex (a-1) as a reddish concentrate (162g) remaining in the 1 liter round-bottom flask. To the flask containing the concentrate, heptane (60g) was added, followed by stirring to obtain a homogeneous solution. While stirring, deionized water (27g, 1.5 mol) was added in a dropwise manner for 1 hour in an internal temperature range of 20 to 35°C. The mixture was further stirred for 4 hours in the temperature range of 20 to 30°C. Then, heptane (350g) was further added in a dropwise manner for 30 minutes in an internal temperature range of 20 to 30°C. The reaction mixture was further stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (76.0g). The titanium content obtained by analyzing the resulting yellow solid titanium compound (A) by ICP emission analyzing device was 27.5%.

### Preparative Example 20

Under nitrogen atmosphere, to a 500 ml four-necked round-bottom flask equipped with a stirring apparatus, a thermometer, and a cooler, tetraisopropoxy titanium (71.1g, 0.25 mol) was added. Then, while stirring, 2,4-pentanedione (50.0g, 0.50 mol) was added in a dropwise manner for 30 minutes in an internal temperature range of 20 to 50°C. The mixture was further stirred for 1 hour in the internal temperature range of 87 to 90°C maintained by the oil bath. The reaction mixture was then subjected to condensation under reduced pressure (final decompression degree : 14 mmHg) to distill isopropanol, thereby obtaining distillate (30g) and the titanium complex (a-1) as a reddish concentrate (91g) remaining in the 500 ml round-bottom flask. To the flask containing the concentrate, heptane (35g) was added, followed by stirring to obtain a homogeneous solution. While stirring, deionized water (9.0g, 0.50 mol) was added in a dropwise manner for 30 minutes in an internal temperature range of 20 to 35°C. The mixture was further stirred for 5 hours in the temperature range of 20 to 30°C. Then, heptane (160g) was further added in a dropwise manner for 30 minutes in an internal temperature range of 20 to 30°C. The reaction mixture was further stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (63.5g). The titanium content obtained by analyzing the resulting yellow solid titanium compound (A) by ICP emission analyzing device was 18.3%.

### [Table1-1]

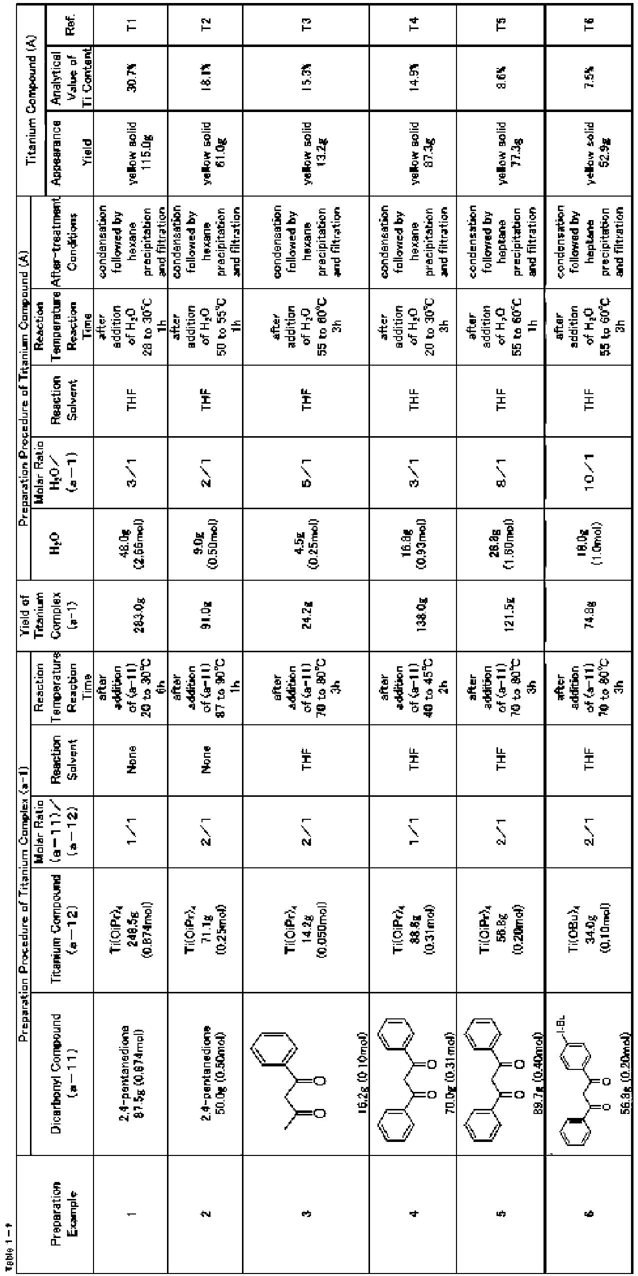

### [Table1-2]

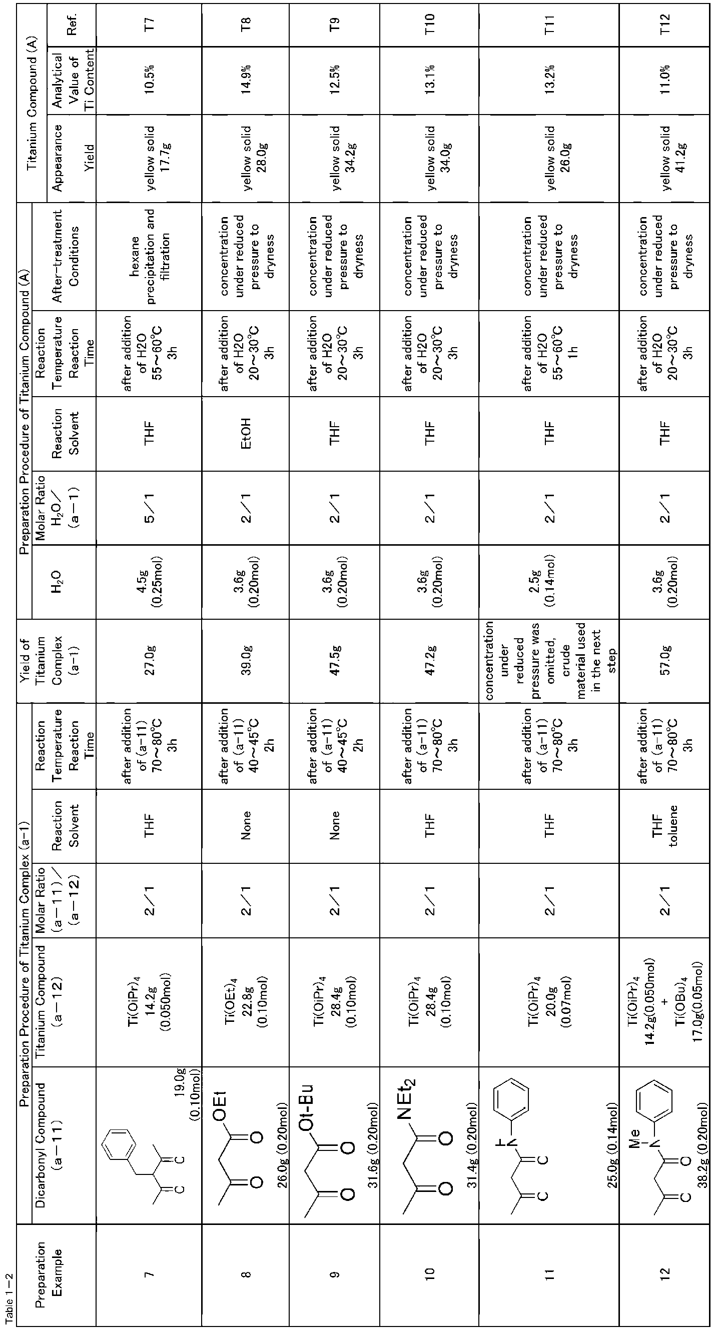

### [Table1-3]

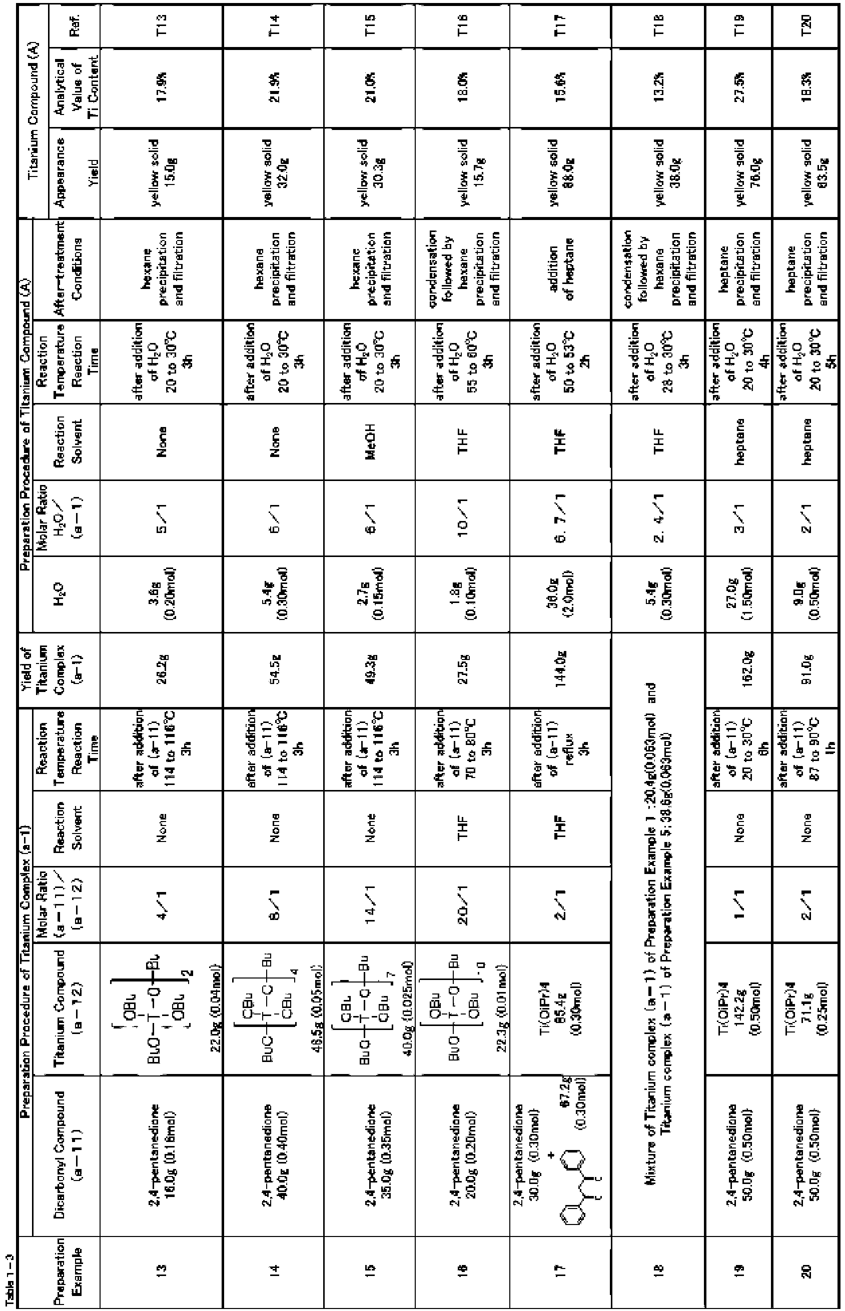

### <Preparation of Composite Catalyst of Titanium Compound (A)>

In accordance with the conditions described hereinafter and in Table 1-4 and Table 1-5, composite catalyst of titanium compound (A) was prepared and was analyzed. The results are shown in Table 1-4 and Table 1-5.

### Preparative Example 21

Under nitrogen atmosphere, to a 1 liter four-necked round-bottom flask equipped with a stirring apparatus, a thermometer, and a cooler, tetraisopropoxy titanium (142.2g, 0.50 mol) was added. Then, while stirring, 2,4-pentanedione (50.0g, 0.50 mol) was added in a dropwise manner for 1 hour in an internal temperature range of 20 to 30°C. The mixture was further stirred for 6 hours in the same temperature range. The reaction mixture was then subjected to condensation under reduced pressure (temperature of the water bath : 50°C, final decompression degree : 14 mmHg) to distill isopropanol, thereby obtaining distillate (30g) and the titanium complex (a-1) as a reddish concentrate (162g) remaining in the 1 liter round-bottom flask. To the flask containing the concentrate, heptane (60g) was added, followed by stirring to obtain a homogeneous solution. Bismuth hydroxide Bi(OH)₃ (9.0g, available from Mitsuwa Chemicals Co., Ltd) and kaolin (5.0g, available from Sigma-Aldrich Co. LLC.) were added, and the reaction mixture was stirred for 15 minutes. Then, while stirring, deionized water (27g, 1.5 mol) was added in a dropwise manner for 1 hour in an internal temperature range of 20 to 35°C. The mixture was further stirred for 4 hours in the temperature range of 20 to 30°C. Subsequently, heptane (350g) was further added in a dropwise manner for 30 minutes in an internal temperature range of 20 to 30°C. The reaction mixture was further stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (91.2g). The titanium content and bismuth content obtained by analyzing the resulting composite catalyst of the yellow solid titanium compound (A) by ICP emission analyzing device were 23.0% and 7.0%, respectively.

### Preparative Example 22

Under nitrogen atmosphere, to a 500 ml four-necked round-bottom flask equipped with a stirring apparatus, a thermometer, and a cooler, tetraisopropoxy titanium (71.1g, 0.25 mol) was added. Then, while stirring, 2,4-pentanedione (50.0g, 0.50 mol) was added in a dropwise manner for 30 minutes in an internal temperature range of 20 to 50°C. The mixture was further stirred for 1 hour in the internal temperature range of 87 to 90°C, maintained by the oil bath. The reaction mixture was then subjected to condensation under reduced pressure (final decompression degree : 14 mmHg) to distill isopropanol, thereby obtaining distillate (30g) and the titanium complex (a-1) as a reddish concentrate (91g) remaining in the 500 ml round-bottom flask. To the flask containing the concentrate, heptane (35g) was added, followed by stirring to obtain a homogeneous solution. Bismuth oxide Bi₂O₃ (33.0g, available from 5N Plus Inc., varistor grade) was added, and the reaction mixture was stirred for 15 minutes. Then, while stirring, deionized water (9.0g, 0.50 mol) was added in a dropwise manner for 30 minutes in an internal temperature range of 20 to 35°C. The mixture was further stirred for 5 hours in the temperature range of 20 to 30°C. Subsequently, heptane (160g) was further added in a dropwise manner for 30 minutes in an internal temperature range of 20 to 30°C. The reaction mixture was further stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (94.7g). The titanium content and bismuth content obtained by analyzing the resulting composite catalyst of the yellow solid titanium compound (A) by ICP emission analyzing device were 12.1% and 30.0%, respectively.

### Preparative Example 23

In a similar manner as Preparative Example 22, titanium complex (a-1) was obtained as a reddish concentrate (91g). To the flask containing the concentrate, heptane (35g) was added, followed by stirring to obtain a homogeneous solution. While stirring, bismuth oxide Bi₂O₃ (33.0g, available from 5N Plus Inc., varistor grade) and Sillitin Z86 (11.5g, available from HOFFMANN MINERAL GmbH) were added, and the reaction mixture was stirred for 15 minutes. Then, while stirring, deionized water (9.0g, 0.50 mol) was added in a dropwise manner for 30 minutes in an internal temperature range of 20 to 35°C. The mixture was further stirred for 5 hours in the temperature range of 20 to 30°C. Subsequently, heptane (160g) was further added in a dropwise manner for 30 minutes in an internal temperature range of 20 to 30°C. The reaction mixture was further stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (94.7g). The titanium content and bismuth content obtained by analyzing the resulting composite catalyst of the yellow solid titanium compound (A) by ICP emission analyzing device were 11.1% and 26.0%, respectively.

### Preparative Example 24, Preparative Example 31, Preparative Example 35, Preparative Example 36

In a similar manner as Preparative Example 23, titanium complex (a-1) was obtained as a reddish concentrate. The type and mount of metal compound (D) and additives were varied and were added to the heptane solution of the titanium complex, thereby obtaining a composite catalyst of the titanium compound (A) in a similar manner.

### Preparative Example 25, Preparative Examplea 27 to Preparative Example 30, Preparative Example 32, Preparative Example 34

In a similar manner as Preparative Example 22, titanium complex (a-1) was obtained as a reddish concentrate. The type and mount of metal compound (D) were varied and were added to the heptane solution of the titanium complex, thereby obtaining a composite catalyst of the titanium compound (A) in a similar manner.

### Preparative Example 26

To a heptane solution of titanium complex (a-1) obtained as a reddish concentrate in a similar manner as Preparative Example 22, Sillitin Z86 (7.5g, available from HOFFMANN MINERAL GmbH) was added, and the reaction mixture was stirred for 15 minutes. Then, while stirring, deionized water (9.0g, 0.50 mol) was added in a dropwise manner for 30 minutes in an internal temperature range of 20 to 35°C. The mixture was further stirred for 5 hours in the temperature range of 20 to 30°C. Subsequently, heptane (160g) was further added in a dropwise manner for 30 minutes in an internal temperature range of 20 to 30°C. The reaction mixture was further stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (69.9g). The titanium content obtained by analyzing the resulting composite catalyst of the yellow solid titanium compound (A) by ICP emission analyzing device was 16.5%.

### Preparative Example 33

To a heptane solution of titanium complex (a-1) obtained as a reddish concentrate in a similar manner as Preparative Example 22, bis(2,4-pentanedionato) zinc (II) (16.0g) and Sillitin Z89 (4g, available from HOFFMANN MINERAL GmbH) were added, and the reaction mixture was stirred for 15 minutes. Then, while stirring, deionized water (9.0g, 0.50 mol) was added in a dropwise manner for 30 minutes in an internal temperature range of 20 to 35°C. The mixture was further stirred for 5 hours in the temperature range of 20 to 30°C. Subsequently, heptane (160g) was further added in a dropwise manner for 30 minutes in an internal temperature range of 20 to 30°C, followed by addition of Sillitin Z89 (4g), and then the reaction mixture was stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (88.6g). The titanium and zinc content obtained by analyzing the resulting composite catalyst of the yellow solid titanium compound (A) by ICP emission analyzing device were 13.4% and 4.1%, respectively.

### Preparative Example 37

Under nitrogen atmosphere, to a 500 ml four-necked round-bottom flask equipped with a stirring apparatus, a thermometer, and a cooler, tetraisopropoxy titanium (71.1g, 0.25 mol) was added. Then, while stirring, a mixture of 2,4-pentanedione (40.0g, 0.40 mol) and 1-phenyl-1,3-butanedione (16.2g, 0.10 mol) was added in a dropwise manner for 30 minutes in an internal temperature range of 20 to 50°C. The mixture was further stirred for 1 hour in the internal temperature range of 87 to 90°C, maintained by the oil bath. The reaction mixture was then subjected to condensation under reduced pressure (final decompression degree : 14 mmHg) to distill isopropanol, thereby obtaining distillate (30g) and the titanium complex (a-1) as a reddish concentrate (97g) remaining in the 500 ml round-bottom flask. To the flask containing the concentrate, toluene (100g) was added, followed by stirring to obtain a homogeneous solution. Bismuth oxide Bi₂O₃ (7.0g, available from 5N Plus Inc., varistor grade), Sillitin Z86 (3.0g, available from HOFFMANN MINERAL GmbH), and cellulose (3.0g, available from Sigma-Aldrich Co. LLC.) were added, and the reaction mixture was stirred for 15 minutes. Then, while stirring, deionized water (9.0g, 0.50 mol) was added in a dropwise manner for 30 minutes in an internal temperature range of 20 to 35°C. The mixture was further stirred for 5 hours in the temperature range of 20 to 30°C. Subsequently, heptane (160g) was further added in a dropwise manner for 30 minutes in an internal temperature range of 20 to 30°C. The reaction mixture was further stirred for 30 minutes in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 4 hours, thereby obtaining dry yellow solid (81.2g). The titanium content and bismuth content obtained by analyzing the resulting composite catalyst of the yellow solid titanium compound (A) by ICP emission analyzing device were 14.6% and 7.2%, respectively.

Preparative Example 38

Under nitrogen atmosphere, to a 500 ml Erlenmyer flask, 1,3-diphenyl-1,3-propanedione (44.9g, 0.20 mol) and THF (200g) were added, and the reaction mixture was stirred to obtain a uniform solution. Separately, under nitrogen atmosphere, to a 500 ml four-necked round-bottom flask equipped with a stirring apparatus, a thermometer, and a cooler, tetrabutoxy titanium (34.0g, 0.10 mol) was added. Then, while stirring, THF solution of 1,3-dicarbonyl compound prepared beforehand was added in a dropwise manner for 1 hour in an internal temperature range of 20 to 68°C. The mixture was allowed to relux by heating with an oil bath of 80°C for 2 hours. The reaction mixture was then cooled to 30°C, and was transferred into a 1 liter eggplant-shaped flask, followed by condensation under reduced pressure using a rotary evaporator to distill THF and butanol. Accordingly, the titanium complex (a-1) was obtained as an orange solid (64.1g). Then, THF (350g) was added to dissolve the solid titanium complex. Separately, to a 1 liter four-necked round-bottom flask equipped with a stirring apparatus, a thermometer, and a cooler, the THF solution of the titanium complex prepared beforehand was added. Then, bismuth oxide Bi₂O₃ (5.0g, available from 5N Plus Inc., varistor grade), was added, and the reaction mixture was stirred for 15 minutes. Then, while stirring, deionized water (14.4g, 0.8 mol) was added in a dropwise manner for 30 minutes in an internal temperature range of 25 to 30°C. The mixture was further stirred for 5 hours in the temperature range of 55 to 60°C. While maintaining the heating and stirring, the reaction mixture was subjected to condensation under reduced pressure (final decompression degree : 250 mmHg) to give the distillate (320g). While stirring the concentrate contained in the flask, heptane (350g) was added in a dropwise manner for 1 hour in an internal temperature range of 20 to 35°C. The reaction mixture was further stirred for 1 hour in the same temperature range. The slurry solution obtained was then subjected to suction filtration to give an yellow wet solid. The wet solid was subjected to vaccum drying (temperature of the water bath : 50°C, final decompression degree : 10 to 20mmHg) for 5 hours, thereby obtaining dry yellow solid (52.0g). The titanium and bismuth content obtained by analyzing the resulting composite catalyst of the yellow solid titanium compound (A) by ICP emission analyzing device was 16.8% and 7.9%, respectively.

### [Table1-4]

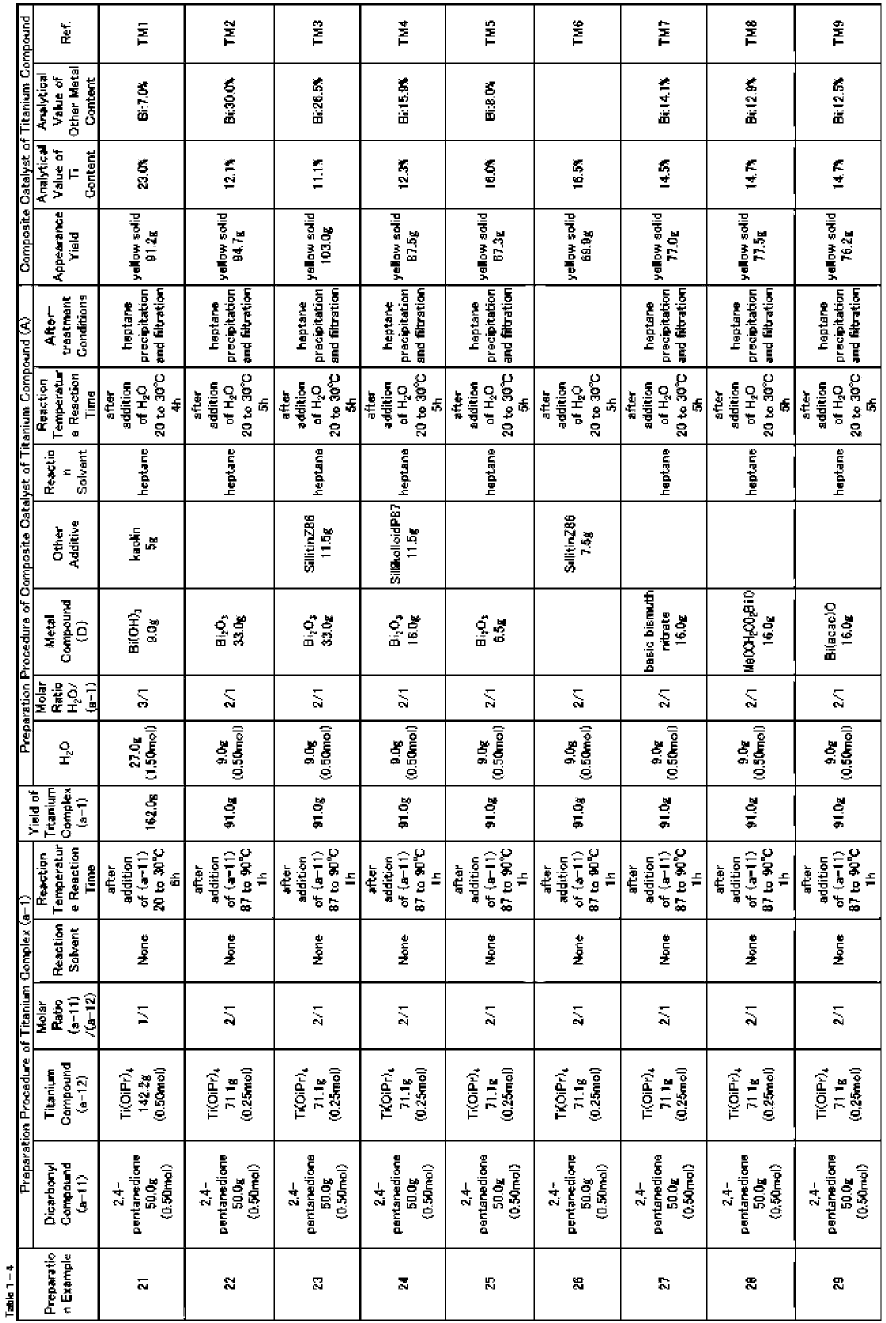

### [Table1-5]

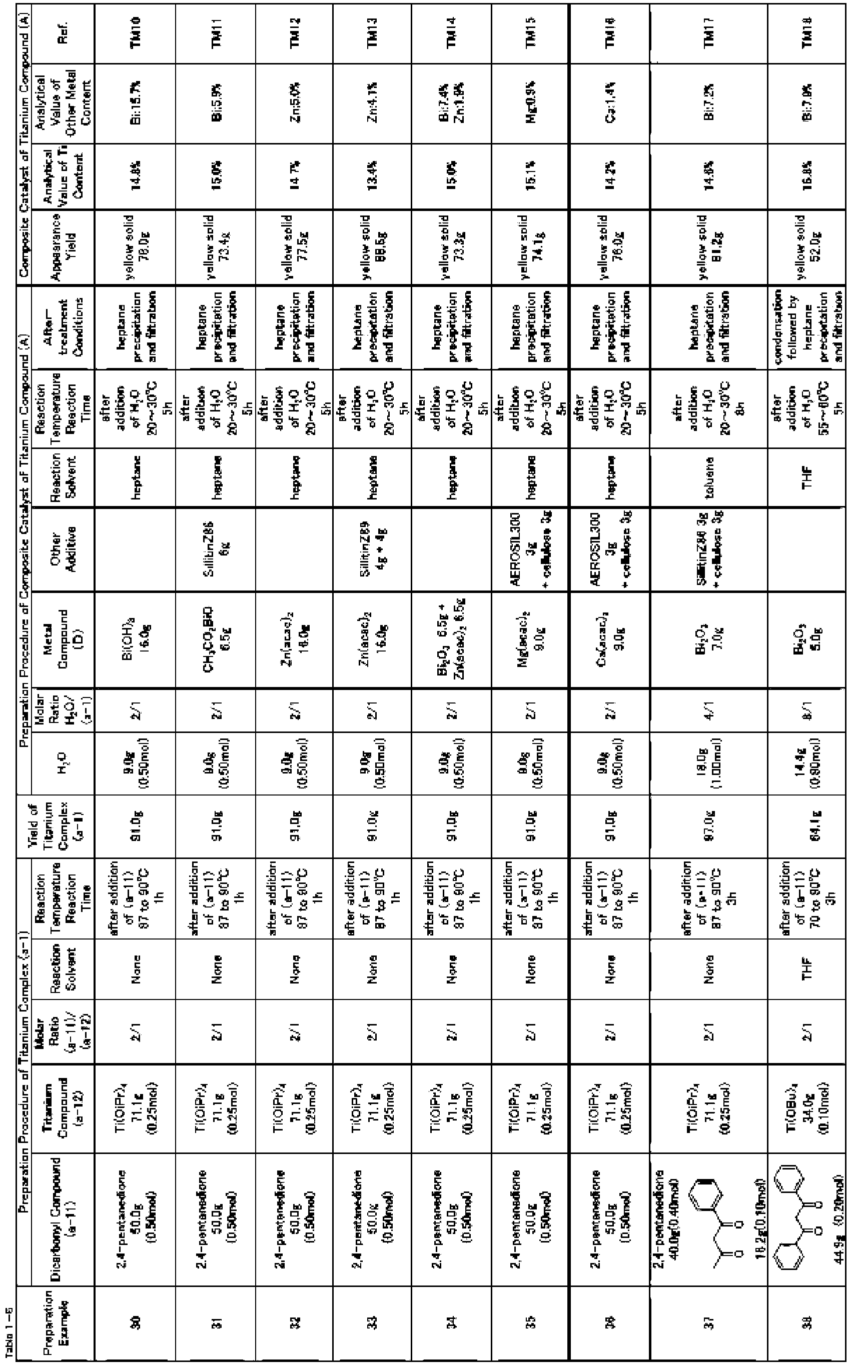

### <Preparation of Base Resin (B)>

### Preparative Example 39

Under nitrogen atmosphere, to a 3 liter four-necked flask equipped with a stirring apparatus, a thermometer, and a cooler, epoxy resin "jER1004AF" (1425g, 1.59 mol by epoxy conversion, available from Mitsubishi Chemical Corporation, epoxy equivalent : 896g/eq, average molecular weight : approximately 1650) and ethylene glycol monobutylether (406g, hereinafter referred to as butyl cellosolve) were added, and the reaction mixture was heated with an oil bath of 120°C and stirred to dissolve the resin. Diethanolamine (175.5g, 1.67 mol) was added in a dropwise manner for 1 hour using a dropping funnel in an internal temperature range of 95 to 115°C. The dropping funnel was rinsed with butyl cellosolve (64g). The reaction mixture was further stirred for 16 hours in the internal temperature range of 115 to 120°C. Subsequently, while stirring, butyl cellosovle (597g) was added in a dropwise manner for 30 minutes, and the reaction mixture was then allowed to cool down to 50°C while stirring. A butyl cellosolve solution of diethanolamine-adduct epoxy resin B-1 (2667g, solid content 60%) was thus obtained. Hydroxyl value of the resin solids obtained by measuring the hydroxyl value of the solution B-1 and then substracting the hydroxyl value of the butyl cellosolve solvent therefrom, was 199 mgKOH/g (3.55mmol/g when converted to OH group). The amine content by calculation was 0.63 mmol/g.

### Preparative Example 40

Under nitrogen atmosphere, to a 2 liter four-necked flask equipped with a stirring apparatus, a thermometer, and a cooler, epoxy resin "jER1007" (683g, 0.37 mol by epoxy conversion, available from Mitsubishi Chemical Corporation, epoxy equivalent : 1852g/eq, average molecular weight : approximately 2900) and butyl cellosolve (258g) were added, and the mixture was heated with an oil bath of 140°C and stirred to dissolve the resin. Diethanolamine (41.0g, 0.39 mol) was added in a dropwise manner for 1 hour using a dropping funnel in an internal temperature range of 128 to 131°C. The dropping funnel was rinsed with butyl cellosolve (37g). The reaction mixture was further stirred for 16 hours in the internal temperature range of 120 to 130°C. Subsequently, while stirring, butyl cellosovle (187g) was added in a dropwise manner for 30 minutes, and the reaction mixture was then allowed to cool down to 50°C while stirring. A butyl cellosolve solution of diethanolamine-adduct epoxy resin B-2 (1205g, solid content 60%) was thus obtained. Hydroxyl value of the resin solids obtained by measuring the hydroxyl value of the solution B-2 and then substracting the hydroxyl value of the butyl cellosolve solvent therefrom, was 157 mgKOH/g (2.80mmol/g when converted to OH group). The amine content by calculation was 0.32 mmol/g.

### <Prepartion of Curing Agent (C) Blocked Polyisocyanate>

### Preparation Example 41

Under nitrogen atmosphere, to a 3 liter four-necked flask equipped with a stirring apparatus, a thermometer, and a cooler, polymethylene polyphenyl polyisocyanate "Sumidur 44V20" (798g, isocyanate group conversion 6.0 mol, available from Sumika Bayer Urethane Co., Ltd., isocyanate group content : 31.5%) was added. The mixture was heated to internal temperature of 95°C while stirring. Subsequently, the heating was terminated, and butyl cellosolve (1063g, 9.0 mol) was added in a dropwise manner for 2 hours while stirring in an internal temperature range of 95 to 120°C. Then, the reaction mixture was heated to an internal temperature range of 115 to 120°C and was stirred for 5 hours. Subsequently, the heating was terminated, and sample was taken to check the disappearance of the absorption by the isocyanate group (2241 cm⁻¹) by observing an IR spectrum. Then, while stirring, butyl cellosolve (290g) was added in a dropwise manner for 15 minutes, and the reaction mixture was further stirred to cool down to 50°C. A butyl cellosolve solution of butyl cellosolve-blocked polymethylene polyphenyl polyisocyanate (2150g, solid content 70%) was thus obtained. The blocked isocyanate group content of the solution by calculation was 2.79 mmol/g.

### <Preparation of Emulsion Solution>

### Preparative Example 42

The butyl cellosolve solution of diethanolamine-adduct epoxy resin B-1 (100g, solid content 60%) obtained in Preparative Example 39, the butyl cellosolve solution of polymethylene polyphenyl polyisocyanate (128g, solid content 70%) obtained in Preparative Example 41, and butyl cellosolve (21g) were mixed well, and thus a butyl cellosolve solution of base resin (B) and curing agent (C) (solid content 60%) was prepared.

To a 3 liter beaker equipped with TK HOMOGENIZING MIXER MARK II Model 2.5 (available from PRIMIX Corporation), deionized water (880g), acetic acid (3.6g), and butyl cellosolve (13g) were added, and the mixture was stirred at 1000rpm. The rotating number of the homo-mixer was set to 12000rpm, and the internal temperature was maintained in the temperature range of 15 to 20°C, while adding the butyl cellosolve solution of base resin (B) and curing agent (C) in a dropwise manner for 6 hours. Then, the mixture was stirred for 6 hours in the same temperature range, to obtain an emulsion solution 1 (1145g, solid content 13%).

### Preparative Example 43

The butyl cellosolve solution of diethanolamine-adduct epoxy resin B-2 (100g, solid content 60%) obtained in Preparative Example 40, the butyl cellosolve solution of polymethylene polyphenyl polyisocyanate (100g, solid content 70%) obtained in Preparative Example 41, and butyl cellosolve (17g) were mixed well, and thus a butyl cellosolve solution of base resin (B) and curing agent (C) (solid content 60%) was prepared.

To a 3 liter beaker equipped with TK HOMOGENIZING MIXER MARK II Model 2.5 (available from PRIMIX Corporation), deionized water (770g), acetic acid (2g), and butyl cellosolve (11g) were added, and the mixture was stirred at 1000rpm. The rotating number of the homo-mixer was set to 12000rpm, and the internal temperature was maintained in a temperature range of 15 to 20°C, while adding the butyl cellosolve solution of base resin (B) and curing agent (C) in a dropwise manner for 6 hours. Then, the mixture was stirred for 6 hours in the same temperature range, to obtain an emulsion solution 2 (1000g, solid content 13%).

### <Preparation of Pigment Catalyst Dispersion Paste>

The butyl cellosolve solution of diethanolamine-adduct epoxy resin B-1 (500g, solid content 60%) obtained in Preparative Example 39, acetic acid (18g), deionized water (605g), and "NONION K-220" (7g, surfactant available from NOF Corporation) were mixed well to prepare a solution for the pigment catalyst dispersion paste (1130g, solid content 26.5%).

### Preparative Example P1

To a 100 ml flask equipped with a mixer, the solution for the pigment catalyst dispersion paste (22.5g), deionized water (5.5g), titanium compound (A) T1 obtained in Preparation Example 1 (5.0g) were added, and the mixture was mixed for 10 minutes. Then, glass beads (60g, particle diameter : 2.5 mm to 3.5 mm) was added, and the mixture was further stirred for 2 hours. Subsequently, the glass beads were removed to give the pigment catalyst dispersion paste P1.

### Preparative Examples P2 to P51

The type and amount of titanium compound (A) or its composite catalyst, and the type and amount of other additives were varied as shown in Table 2-1 to Table 2-5, and thus the pigment catalyst dispersion pastes P2 to P51 were obtained by the process similar as Preparative Example P1.

### Comparative Preparative Example RP1

Tris(2,4-pentanedionato) aluminum (III) (5.0g) was used in place of the titanium compound of the present invention to give the pigment catalyst dispersion paste RP1 by the process similar as Preparative Example P1.

### Comparative Preparative Example RP2

Tetrakis(2,4-pentandionato) zirconium (IV) (5.0g) cited in Patent Document 5 was used in place of the titanium compound of the present invention to give the pigment catalyst dispersion paste RP2 by the process similar as Preparative Example P1.

### Comparative Preparative Example RP3

Titanium dioxide TiO₂ (5.0g) was used in place of the titanium compound of the present invention to give the pigment catalyst dispersion paste RP3 by the process similar as Preparative Example P1.

### Comparative Preparative Example RP4

Zinc acetate (5.0g) was used in place of the titanium compound of the present invention in an attempt to obtain the pigment catalyst dispersion paste. However, the attempt resulted in thickening and gellation, and thus it was unable to conduct filtration.

### Comparative Preparative Example RP5

Bismuth oxide Bi₂O₃ (5.0g) was used in place of the titanium compound of the present invention to give the pigment catalyst dispersion paste RP5 by the process similar as Preparative Example P1.

**[Table2-1]**

| Table 2-1 | | Pigment Catalyst Dispersion Paste | | | | | | | | | | |
|---|---|---|---|---|---|---|---|---|---|---|---|---|
| | | P1 | P2 | P3 | P4 | P5 | P6 | P7 | P8 | P9 | P10 | P11 |
| Resin Solution for Pigment Catalyst Dispersion Paste | | 22.5 | 22.5 | 22.5 | 22.5 | 22.5 | 22.5 | 22.5 | 22.5 | 22.5 | 22.5 | 22.5 |
| | T1 | 5.0 | | | | | | | | | | |
| | T2 | | 5.0 | | | | | | | | | |
| | T3 | | | 5.0 | | | | | | | | |
| | T4 | | | | 5.0 | | | | | | | |
| Titanium Compound (A) | T5 | | | | | 5.0 | | | | | | |
| | T6 | | | | | | 5.0 | | | | | |
| | T7 | | | | | | | 5.0 | | | | |
| | T8 | | | | | | | | 5.0 | | | |
| | T9 | | | | | | | | | 5.0 | | |
| | T10 | | | | | | | | | | 5.0 | |
| | T11 | | | | | | | | | | | 5.0 |
| deionized water | | 5.5 | 5.5 | 5.5 | 5.5 | 5.5 | 5.5 | 5.5 | 5.5 | 5.5 | 5.5 | 5.5 |

**[Table2-2]**

| Table 2-2 | | Pigment Catalyst Dispersion Paste | | | | | | | | | | |
|---|---|---|---|---|---|---|---|---|---|---|---|---|
| | | P12 | P13 | P14 | P15 | P16 | P17 | P18 | P19 | P20 | P21 | P22 |
| Resin Solution for Pigment Catalyst Dispersion Paste | | 22.5 | 22.5 | 22.5 | 22.5 | 22.5 | 22.5 | 22.5 | 22.5 | 22.5 | 22.5 | 22.5 |
| | T1 | | | | | | | | 5.0 | | | |
| | T2 | | | | | | | | | 5.0 | | |
| | T3 | | | | | | | | | | 5.0 | |
| | T5 | | | | | | | | | | | 5.0 |
| Titanium Compound (A) | T12 | 5.0 | | | | | | | | | | |
| | T13 | | 5.0 | | | | | | | | | |
| | T14 | | | 5.0 | | | | | | | | |
| | T15 | | | | 5.0 | | | | | | | |
| | T16 | | | | | 5.0 | | | | | | |
| | T17 | | | | | | 5.0 | | | | | |
| | T18 | | | | | | | 5.0 | | | | |
| Metal Compound (D) | Al(acac)₃ | | | | | | | | 2.6 | | | |
| | 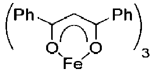 | | | | | | | | | 1.3 | | |
| | Cu(acac)₂ | | | | | | | | | | 1.3 | |
| | Bi(OH)₃ | | | | | | | | | | | 1.3 |
| deionized water | | 5.5 | 5.5 | 5.5 | 5.5 | 5.5 | 5.5 | 5.5 | 5.5 | 5.5 | 5.5 | 5.5 |

**[Table2-3]**

| Table 2-3 | | Piement Catalyst Dispersion Paste | | | | | | | | | | |
|---|---|---|---|---|---|---|---|---|---|---|---|---|
| | | P23 | P24 | P25 | P26 | P27 | P28 | P29 | P30 | P31 | P32 | P33 |
| Resin Solution for Pigment Catalyst Dispersion Paste | | 22.5 | 22.5 | 22.5 | 22.5 | 22.5 | 22.5 | 22.5 | 22.5 | 22.5 | 22.5 | 22.5 |
| | T1 | | | 5.0 | | | | | | | | |
| | T2 | | | | 5.0 | 2.5 | | | | | | |
| Titanium Compound (A) | T3 | | | | | | | | | | | |
| | T5 | | | | | | | | | | | |
| | T13 | 5.0 | | | | | | | | | | |
| | T14 | | 5.0 | | | 2.5 | | | | | | |
| | T19 | | | | | | 5.0 | | | | | |
| | T20 | | | | | | | 5.0 | 3.3 | 4.0 | 4.0 | 4.0 |
| Metal Compound (D) | 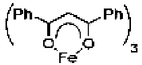 | | | | | 0.6 | | | | | | |
| | Bi₂O₃ | 1.3 | 1.3 | 1.3 | 1.3 | 0.7 | | | 1.7 | | | |
| | basic bismuth nitrate | | | | | | | | | 1.0 | | |
| | MeOCH₂CO₂BiO | | | | | | | | | | 1.0 | |
| | Bi(acac)O | | | | | | | | | | | 1.0 |
| deionized water | | 5.5 | 5.5 | 5.5 | 5.5 | 5.5 | 5.5 | 5.5 | 5.5 | 5.5 | 5.5 | 5.5 |

**[Table2-4]**

| Table 2-4 | | Pigment Catalyst Dispersion Paste | | | | | | | | |
|---|---|---|---|---|---|---|---|---|---|---|
| | | P34 | P35 | P36 | P37 | P38 | P39 | P40 | P41 | P42 |
| Resin Solution for Pigment Catalyst Dispersion Paste | | 22.5 | 22.5 | 22.5 | 22.5 | 22.5 | 22.5 | 22.5 | 22.5 | 22.5 |
| | TM1 | 5.0 | | | | | | | | |
| | TM2 | | 5.0 | | | | | | | |
| Composite Catalyst of Titanium Compound (A) | TM3 | | | 5.0 | | | | | | |
| | TM4 | | | | 5.0 | | | | | |
| | TM5 | | | | | 5.0 | | | | |
| | TM6 | | | | | | 5.0 | | | |
| | TM7 | | | | | | | 5.0 | | |
| | TM8 | | | | | | | | 5.0 | |
| | TM9 | | | | | | | | | 5.0 |
| deionized water | | 5.5 | 5.5 | 5.5 | 5.5 | 5.5 | 5.5 | 5.5 | 5.5 | 5.5 |

**[Table2-5]**

| Table 2-5 | | Pigment Catalyst Dispersion Paste | | | | | | | | |
|---|---|---|---|---|---|---|---|---|---|---|
| | | P43 | P44 | P45 | P46 | P47 | P48 | P49 | P50 | P51 |
| Resin Solution for Pigment Catalyst Dispersion Paste | | 22.5 | 22.5 | 22.5 | 22.5 | 22.5 | 22.5 | 22.5 | 22.5 | 22.5 |
| | TM10 | 5.0 | | | | | | | | |
| | TM11 | | 5.0 | | | | | | | |
| Composite Catalyst of Titanium Compound (A) | TM12 | | | 5.0 | | | | | | |
| | TM13 | | | | 5.0 | | | | | |
| | TM14 | | | | | 5.0 | | | | |
| | TM15 | | | | | | 5.0 | | | |
| | TM16 | | | | | | | 5.0 | | |
| | TM17 | | | | | | | | 5.0 | |
| | TM18 | | | | | | | | | 5.0 |
| deionized water | | 5.5 | 5.5 | 5.5 | 5.5 | 5.5 | 5.5 | 5.5 | 5.5 | 5.5 |

**[Table2-6]**

| Table 2-6 | | Pigment Catalyst Dispersion Paste | | | |
|---|---|---|---|---|---|
| | | RP1 | RP2 | RP3 | RP5 |
| Resin Solution for Pigment Catalyst Dispersion Paste | | 22.5 | 22.5 | 22.5 | 22.5 |
| Metal Compound (D) | Al(acac)₃ | 5.0 | | | |
| | Bi₂O₃ | | | | 5.0 |
| Compound for Comparison | Zr(acac)₄ | | 5.0 | | |
| Titanium Compound for Comparison | TiO₂ | | | 5.0 | |
| deionized water | | 5.5 | 5.5 | 5.5 | 5.5 |

### <Manufacure of Electrodeposition Coating Composition 1: Manufacture by Mixing Emulsion Solution and Pigment Catalyst Dispersion Paste>

### Examples 1 to 32 and 34 to 57, and Comparative Examples 1 to 6 and 8

The emulsion solution and the pigment catalyst dispersion paste shown in Table 3-1 to Table 3-7 were formulated by the ratio (parts by mass) shown in Table 3-1 to Table 3-7, and were mixed and dispersed, thereby manufacturing the electrodeposition coating composition.

### <Manufacure of Electrodeposition Coating Composition 2: Manufacture by Mixing Emulsion Solution and Catalyst Compound at Once>

### Example 33

The emulsion solution and the titanium compound (A) T13 shown in Table 3-4 were formulated by the ratio (parts by mass) shown in Table 3-4, and were mixed and dispersed, thereby manufacturing the electrodeposition coating composition.

### Comparative Example 7

The emulsion solution shown in Table 3-7 and zinc acetate in place of the titanium compound of the present invention were formulated by the ratio (parts by mass) shown in Table 3-7, and were mixed and dispersed, thereby manufacturing the electrodeposition coating composition.

### <Electrodeposition Coating, Curing Test>

A cold rolled steel (available from Nippon Testpanel Co., Ltd, standard test piece certified by Japan Association of Corrosion Control, 0.8 x 70 x 150 mm) treated with "Palbond L3080" (available from Nihon Parkerizing Co., Ltd., zinc phosphate treating agent) was immersed in the electrodeposition coating compositions obtained in Examples 1 to 57 and Comparative Examples 1 to 8. The test pieces were thus obtained, and each of the 12 test pieces were subjected to electrodeposition as an anode. The electrodeposition was carried out with the voltage of 300V, electrification time of 15 seconds, and the temperature of the coating in the electro-coating tank of 20 to 30°C. The coating obtained by electrodeposition coating was rinsed with deionized water and was then air-dried for 6 hours. Subsequently, the test pieces were baked in a temperature chamber (available from Espec Corp., GPHH-202). The baking was carried out with the conditions of 180°C/20min, 170°C/20min, 160°C/20min, and 150°C/20min, and 3 test pieces were used for each of the baking conditions. The coating thickness of the dried coating was approximately 20 µm.

Each of the electrodeposition coatings thus obtained was rubbed for 30 times with a gauze immersed in methylethylketone with a pressure of approximately 2kg/cm³. The external appearance was observed visually and the curing property of the coating was evaluated in accordance with the following criteria. The results are shown in Table 3-1 to Table 3-7.
A: No Effect
B: Decrease in Gloss of Coating Surface
C: Noticable Coloring on Gauze Due to Dissolved Coating, and Scar Observed on Coating Surface
D: Coating Dissolved, and Base of the Test Piece Exposed

Here, in Table 3-1 to Table 3-7 and Table 4, "Titanium Compound Content %" refers to the mass% of the titaniunm compound (A) and the comparative titanium compound with respect to the total solids of the base resin (B) and the curing agent (C) blocked isocyanate contained in the electrodeposition coating composition; and "Other Metal Compound Content %" refers to the mass% of the other metal compound (D) with respect to the total solids of the base resin (B) and the curing agent (C) blocked isocyanate contained in the electrodeposition coating composition. When a composite catalyst of the titanium compound (A) is used, the analytical value of the titanium atom content (%) and the analytical value of the other metal atom content (%) regarding the composite catalyst are obtained by ICP emission spectrometry, and then the content of the corresponding titanium compound (A) in the composite catalyst and the content of the corresponding other metal compound are calculated from these analytical values and the yield of the composite catalyst. From the calculated values of the content of the titanium compound (A) and the other metal compound (D), the mass% of the titanium compound (A) and the other metal compound (D) with respect to the total solids of the base resin (B) and the curing agent (C) blocked isocyanate contained in the electrodeposition coating composition were calculated.

**[Table3-1]**

| Tables 3-1 | | Example | | | | | | | | | |
|---|---|---|---|---|---|---|---|---|---|---|---|
| | | 1 | 2 | 3 | 4 | 5 | 6 | 7 | 8 | 9 | 10 |
| Emulsion Solution 1 | | 250 | 250 | 250 | 250 | 250 | 250 | 250 | 250 | 250 | |
| Emulsion Solution 2 | | | | | | | | | | | 250 |
| Pigment Catalyst Dispersion Paste | P1 | 4.3 | 10.7 | | | | | | | | |
| | P2 | | | 1.1 | 4.3 | 8.6 | | | | | |
| | P3 | | | | | | 4.3 | | | | |
| | P4 | | | | | | | 4.3 | | | |
| | P5 | | | | | | | | 4.3 | | |
| | P6 | | | | | | | | | 4.3 | |
| | P7 | | | | | | | | | | 4.3 |
| Titanium Compound (A) | | T1 | T1 | T2 | T2 | T2 | T3 | T4 | T5 | T6 | T7 |
| Titanium Compound Content % | | 2.0 | 4.7 | 0.5 | 2.0 | 3.8 | 2.0 | 2.0 | 2.0 | 2.0 | 2.0 |
| Curing Test | 180°C | A | A | A | A | A | A | A | A | A | A |
| | 170°C | A | A | C | A | A | A | A | A | A | B |
| | 160°C | B | A | D | | A | B | B | B | C | C |
| | 150°C | D | A | D | C | A | D | D | D | D | D |

**[Table3-2]**

| Table 3-2 | | Example | | | | | | | | | |
|---|---|---|---|---|---|---|---|---|---|---|---|
| | | 11 | 12 | 13 | 14 | 15 | 16 | 17 | 18 | 19 | 20 |
| Emulsion Solution 1 | | | | | | | | 250 | 250 | 250 | 250 |
| Emulsion Solution 2 | | 250 | 250 | 250 | 250 | 250 | 250 | | | | |
| Pigment Catalyst Dispersion Paste | P8 | 4.3 | | | | | | | | | |
| | P9 | | 4.3 | | | | | | | | |
| | P10 | | | 4.3 | | | | | | | |
| | P11 | | | | 4.3 | | | | | | |
| | P12 | | | | | 4.3 | | | | | |
| | P13 | | | | | | 4.3 | 4.3 | | | |
| | P14 | | | | | | | | 4.3 | | |
| | P15 | | | | | | | | | 4.3 | |
| | P16 | | | | | | | | | | 4.3 |
| Titanium Compound (A) | | T8 | T9 | T10 | T11 | T12 | T13 | T13 | T14 | T15 | T16 |
| Titanium Compound Content % | | 2.0 | 2.0 | 2.0 | 2.0 | 2.0 | 2.0 | 2.0 | 2.0 | 2.0 | 2.0 |
| Curing Test | 184°G | A | A | A | A | A | A | A | A | A | A |
| | 170°C | A | A | A | A | A | A | A | A | A | A |
| | 160°C | C | c | C | C | C | A | A | B | C | C |
| | 150°C | D | D | D | D | D | B | C | C | D | D |

**[Table3-3]**

| Table 3-3 | | Example | | | | | | | | | |
|---|---|---|---|---|---|---|---|---|---|---|---|
| | | 21 | 22 | 23 | 24 | 25 | 26 | 27 | 28 | 29 | 30 |
| Emulsion Solution 1 | | 250 | 250 | 250 | 250 | 250 | 250 | 250 | 250 | 250 | 250 |
| Pigment Catalyst Dispersion Paste | P17 | 4.3 | | | | | | | | | |
| | P18 | | 4.3 | | | | | | | | |
| | P19 | | | 4.5 | | | | | | | |
| | P20 | | | | 4.5 | | | | | | |
| | P21 | | | | | 4.5 | | | | | |
| | P22 | | | | | | 4.5 | | | | |
| | P23 | | | | | | | 4.5 | | | |
| | P24 | | | | | | | | 4.5 | | |
| | P25 | | | | | | | | | 4.5 | |
| | P26 | | | | | | | | | | 4.5 |
| Titanium Compound (A) | | T17 | T18 | T1 | T2 | T3 | T5 | T13 | T14 | T1 | T2 |
| Metal of Metal Compound (D) | | | | Al | Fe | Cu | Bi | Bi | Bi | Bi | Bi |
| Titanium Compound Content % | | 2.0 | 2.0 | 1.9 | 2.0 | 2.0 | 2.0 | 2.0 | 2.0 | 2.0 | 2.0 |
| Content of Other Metal Compound % | | | | 1.1 | 0.5 | 0.5 | 0.5 | 0.5 | 0.5 | 0.5 | 0.5 |
| Curing Test | 184°C | A | A | A | A | A | A | A | A | A | A |
| | 170°C | A | A | A | A | A | A | A | A | A | A |
| | 160°C | B | B | B | A | B | A | A | A | A | A |
| | 150°C | C | D | C | B | C | C | A | B | B | A |

**[Table3-4]**

| Table 3-4 | | Example | | | | | | | | |
|---|---|---|---|---|---|---|---|---|---|---|
| | | 31 | 32 | 33 | 34 | 35 | 36 | 37 | 38 | 39 |
| Emulsion Solution 1 | | 250 | 125 | 250 | 250 | 250 | 250 | 250 | 250 | 250 |
| Emulsion Solution 2 | | | 125 | | | | | | | |
| Pigment Catalyst Dispersion Paste | P20 | | 2.2 | | | | | | | |
| | P25 | | 2.3 | | | | | | | |
| | P27 | 4.5 | | | | | | | | |
| | P28 | | | | 5.5 | | | | | |
| | P29 | | | | | 5.5 | | | | |
| | P30 | | | | | | 5.5 | | | |
| | P31 | | | | | | | 5.5 | | |
| | P32 | | | | | | | | 5.5 | |
| | P33 | | | | | | | | | 5.5 |
| Titanium Compound (A) T13 | | | | 0.65 | | | | | | |
| Titanium Compound (A) | | T2+T14 | T2+T1 | T13 | T19 | T20 | T20 | T20 | T20 | T20 |
| Metal of Metal Compound (D) | | Fe+Bi | Fe+Bi | | | | Bi | Bi | Bi | Bi |
| Titanium Compound Content % | | 2.0 | 2.0 | 2.0 | 2.5 | 2.5 | 1.7 | 2.0 | 2.0 | 2.0 |
| Content of Other Metal Compound % | | 0.5 | 0.5 | | | | 0.8 | 0.5 | 0.5 | 0.5 |
| Curing Test | 180°C | A | A | A | A | A | A | A | A | A |
| | 170°C | A | A | A | A | A | A | A | A | A |
| | 160°C | A | A | B | B | A | A | A | A | A |
| | 150°C | A | A | D | C | B | A | B | B | A |

**[Table3-5]**

| Table 3-5 | | Example | | | | | | | | |
|---|---|---|---|---|---|---|---|---|---|---|
| | | 40 | 41 | 42 | 43 | 44 | 45 | 46 | 47 | 48 |
| Emulsion Solution 1 | | 250 | 250 | 250 | 250 | 250 | 250 | 250 | 250 | 250 |
| Pigment Catalyst Disparsion Paste | P34 | 5.5 | | | | | | | | |
| | P35 | | 5.5 | | | | | | | |
| | P36 | | | 5.5 | | | | | | |
| | P37 | | | | 5.5 | | | | | |
| | P38 | | | | | 5.5 | | | | |
| | P39 | | | | | | 5.5 | | | |
| | P40 | | | | | | | 5.5 | | |
| | P41 | | | | | | | | 5.5 | |
| | P42 | | | | | | | | | 5.5 |
| Composite Catalyst of Titanium Compound (A) | | TM1 | TM2 | TM3 | TM4 | TM5 | TM6 | TM7 | TM8 | TM9 |
| Metal of Metal Compound (D) | | Bi | Bi | Bi | Bi | Bi | | Bi | Bi | Bi |
| Titanium Compound Content % | | 2.1 | 1.7 | 1.5 | 1.8 | 2.3 | 2.3 | 2.0 | 2.0 | 2.0 |
| Content of Other Metal Compound % | | 0.3 | 0.8 | 0.8 | 0.5 | 0.2 | | 0.5 | 0.5 | 0.5 |
| Curing Test | 180°C | A | A | A | A | A | A | A | A | A |
| | 170°C | A | A | A | A | A | A | A | A | A |
| | 160°C | A | A | A | A | A | A | A | A | A |
| | 150°C | A | A | A | A | A | B | B | B | A |

**[Table3-6]**

| Table 3-6 | | Example | | | | | | | | |
|---|---|---|---|---|---|---|---|---|---|---|
| | | 49 | 50 | 51 | 52 | 53 | 54 | 55 | 56 | 57 |
| Emulsion Solution 1 | | 250 | 250 | 250 | 250 | 250 | 250 | 250 | 250 | 250 |
| | P43 | 5.5 | | | | | | | | |
| | P44 | | 5.5 | | | | | | | |
| | P45 | | | 5.5 | | | | | | |
| Pigment Catalyst Dispersion Paste | P46 | | | | 5.5 | | | | | |
| | P47 | | | | | 5.5 | | | | |
| | P48 | | | | | | 5.5 | | | |
| | P49 | | | | | | | 5.5 | | |
| | P50 | | | | | | | | 5.5 | |
| | P51 | | | | | | | | | 5.5 |
| Composite Catalyst of Titanium Compound (A) | | TM10 | TM11 | TM12 | TM13 | TM14 | TM15 | TM16 | TM17 | TM18 |
| Metal of Metal Compound (D) | | Bi | Bi | Zn | On | Bi+Zn | Mg | Ca | Bi | Bi |
| Titanium Compound Content % | | 2.0 | 2.1 | 2.0 | 1.8 | 2.1 | 2.0 | 2.0 | 2.1 | 2.3 |
| Content of Other Metal Compound % | | 0.5 | 0.2 | 0.5 | 0.5 | 0.4 | 0.3 | 0.3 | 0.2 | 0.2 |
| Curing Test | 180°C | A | A | A | A | A | A | A | A | A |
| | 170°C | A | A | A | A | A | A | A | A | A |
| | 160°C | A | A | A | A | A | A | A | A | A |
| | 150°C | A | B | B | B | A | C | C | B | C |

**[Table3-7]**

| Table 3-7 | | | Comparative Example | | | | | | | |
|---|---|---|---|---|---|---|---|---|---|---|
| | | | 1 | 2 | 3 | 4 | 5 | 6 | 7 | 8 |
| Emulsion Solution 1 | | | 250 | 250 | 250 | 250 | 250 | 250 | 250 | 250 |
| Pigment Catalyst Dispersion Paste | RP1 | Al(acac)₃ | 4.3 | 10.7 | | | | | | |
| | RP2 | Zr(acac)₄ | | | 4.3 | 10.7 | | | | |
| | RP3 | TiO₂ | | | | | 4.3 | 10.7 | | |
| | RP5 | Bi₂O₃ | | | | | | | | 5.5 |
| Compound for Comparision Zinc Acetate | | | | | | | | | 0.65 | |
| Titanium Compound Content % | | | | | | | 2.0 | 4.7 | | |
| Content of Other Metal Compound % | | | 2.0 | 4.7 | 2.0 | 4.7 | | | 2.0 | 2.5 |
| Curing Test | 180°C | | D | C | D | C | D | D | B | A |
| | 170°C | | D | D | D | D | D | D | C | B |
| | 160°C | | D | D | D | D | D | D | D | D |
| | 15C°C | | D | D | D | D | D | D | D | D |

### <Stability Test of Catalyst Contained in Pigment Catalyst Dispersion Paste>

The pigment catalyst dispersion pastes obtained in Preparative Examples P2, P23, P26, and P27 were each put in a glass sampling bottle, sealed, and were stored in a thermostatic chamber at 40°C for 30 days. No external effect was observed for all of the samples. These pastes were used to manufacture the electrodeposition coating composition with the same conditions as the Example 5, Example 27, Example 30, Example 31, and then the curing test for the electrodeposition coating was conducted for the second time. The results are shown in Table 4. In the curing test, no difference was found between the results obtained in the tests conducted for the first time and the second time. Accordingly, the pigment catalyst dispersion paste containing the titanium compound of the present invention is stable for the afore-mentioned period of time. In addition, it was confirmed that the results obtained for the test conducted for the second time achieved superior curing catalyst ability as the test conducted for the first time.

**[Table4]**

| Table 4 | | Example | | | |
|---|---|---|---|---|---|
| | | 58 | 59 | 60 | 61 |
| Emulsion Solution 1 | | 250 | 250 | 250 | 250 |
| Pigment Catalyst Dispersion Paste | P2 (After 30 days storage at 40°C) | 8.6 | | | |
| | P23 (After 30 days storage at 40°C) | | 4.5 | | |
| | P26 (After 30 days storage at 40°C) | | | 4.5 | |
| | P27 (After 30 days storage at 40°C) | | | | 4.5 |
| Titanium Compound (A) | | T2 | T13 | T2 | T2+T14 |
| Metal of Metal Compound (D) | | | | Bi | Fe+Bi |
| Titanium Compound Content % | | 3.8 | 2.0 | 2.0 | 2.0 |
| Content of Other Metal Compound % | | | 0.5 | 0.5 | 0.5 |
| Curing Test | 180°C | A | A | A | A |
| | 170°C | A | A | A | A |
| | 160°C | A | A | A | A |
| | 150°C | A | A | A | A |

### <Stability Test of Catalyst Contained in Pigment Catalyst Dispersion Paste 2>

The pigment catalyst dispersion pastes obtained in Preparative Examples P35, P36, P30, and RP5 were each put in a glass sampling bottle, sealed, and were stored in a thermostatic chamber at 35°C for 10 days, 30 days, or 60 days. The redispersion ability of the pastes after each of the storage period and the chage in the viscosity of the pastes were observed. With respect to the redispersion ability, the following criteria were used. The viscocity was measured by using an E-type viscometer, with the conditions being cone angle of 1°34', cone diameter of 2.4cm, rotation number of 5rpm, and temperature of 25°C. Here, the viscosity of the stored samples were measured after shaking the samples for redispersion.

### (Criteria for Evaluating Redispersion Ability)

A: Shows the initial appearance after shaking for 1 minute. B: Shows the initial appearance after shaking for 2 minutes. C: Shows the initial appearance after shaking for 5 minutes. D: Thicken and solidify.

Subsequently, the pigment catalyst dispersion pastes P35, P36, P30, and RP5 stored for 60 days were used to manufacture the electrodeposition coating compositions by the same conditions as Example 41, Example 42, and Example 36. Curing test for the electrodeposition coating was then conducted.

The results are shown in Table 5 to Table 7.

**[Table 5]**

| Table 5 | | Redispersion Ability | | |
|---|---|---|---|---|
| Pigment Catalyst Dispersion Paste | | after 10 days | after 30 days | after 60 days |
| P35 | Composite Catalyst of Titanium Compound (A) TM2 | A | B | B |
| P36 | Composite Catalyst of Titanium Compound (A) TM3 | A | A | A |
| P30 | Formulate Bi₂O₃ and Titanium Compound (A) T20 | B | C | C |
| RP5 | Bi₂O₃ | D | | |

**[Table 6]**

| Table 6 | | Viscosity (mPa·S) | | | |
|---|---|---|---|---|---|
| Pigment Catalyst Dispersion Paste | | at preparation | after 10 days | after 30 days | after 60 days |
| P35 | Composite Catalyst of Titanium Compound (A) TM2 | 12 | 12 | 14 | 13 |
| P36 | Composite Catalyst of Titanium Compound (A) TM3 | 13 | 13 | 13 | 13 |
| P30 | Formulate Bi2O3 and Titanium Compound (A) T20 | 13 | 18 | 42 | 85 |
| RP5 | Bi₂O₃ | 15 | N.A. | | |

**[Table7]**

| Table 7 | | | | |
|---|---|---|---|---|
| | | 62 | 63 | 64 |
| Emulsion Solution 1 | | 250 | 250 | 250 |
| | P35 (After 30 days storage at 35°) | 5.5 | | |
| | P36 (After 60 days storage at 35°C) | | 5.5 | |
| | P30 (After 60 days storage at 35°C) | | | 5.5 |
| Titanium Compound (A) | | T20 | T20 | T20 |
| Metal of Metal Compound (D) | | Bi | Bi | Bi |
| Titanium Compound Content % | | 1.7 | 1.5 | 2.0 |
| Content of Other Metal Compound % | | 0.8 | 0.8 | 0.5 |
| Curing Test | 180°C | A | A | A |
| | 170°C | A | A | A |
| | 160°C | A | A | B |
| | 150°C | A | A | C |

From the results shown in Table 5 to Table 6, the followings can be understood.
(1) P36 had the highest paste redispersion ability, and no change was observed in its viscosity.
(2) P35 had somewhat inferior paste redispersion ability compared with P36, but no change was observed in its viscosity.
(3) P30 had somewhat inferior paste redispersion ability compared with P36 and P35, and increase in viscosity was observed.
(4) Viscosity of RP5 increased and the paste solidified in the end.

The reasons for such results are not exactly known, however, the following mechanism can be hypothesized.

With respect to RP5, it is hypothesized that the reaction of the acetic acid and Bi₂O₃ in the paste lead to gelation.

With respect to P30, the titanium compound (A) and Bi₂O₃ are merely being mixed after obtaining the titanium compound (A) by hydrolysis. Therefore, it is hypothesized that Bi₂O₃ is exposed, thereby provoking the reaction between acetic acid and Bi₂O₃ contained in the paste to some extent, leading to decrease in redispersion ability and increase in viscosity.

In contrast, with respect to P36 and P35, since the titanium complex was hydrolysized in the presence of Bi₂O₃, the surface of the Bi₂O₃ was coated with the titanium compound. Therefore, it is hypothesized that Bi₂O₃ was inhibited from coming into contact with the acetic acid contained in the paste, thereby preventing unfavorable reaction. Accordingly, the paste was able to maintain stable dispersion conditions.

In addition, with respect to P36, the hydrolysis of the titanium complex was carried out in the presense of Sillitin as the dispersing filler. Therefore, it is hypothesized that this filler had further enhanced the redispersion ability.

For such reasons, no change was observed in the viscosity of P36 and P35 after 60 days of storage. As shown in Table 7, the results of the curing test for the electrodeposition coating was superior as the results obtained before the stability test. On the other hand, viscosity of P30 increased after 60 days of storage, and the physical property of the paste changed. Accordingly, the results of the curing test for the electrodeposition coating was somewhat inferior compared with the results obtained before the stability test.

## Claims

1. An electrodeposition coating composition comprising a titanium compound (A), a base resin (B) and a neutralizer (E) for dispersing the titanium compound (A) and the base resin (B) in water,
wherein the titanium compound (A) is at least one type of a titanium compound represented by the following Chemical Formulas (2) to (5): 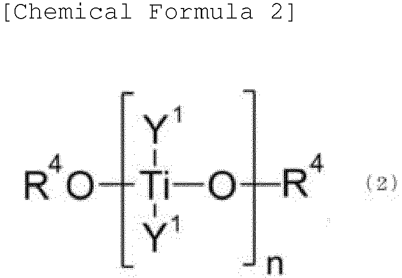 wherein, n represents an integer of 1 to 10; Y¹ represent OR⁴ or 1,3-dicarbonylate derived from a dicarbonyl compound (a-11) of the Chemical Formula (1), number of Y¹ representing the 1,3-dicarbonylate being m (1≤m≤2n) and total number of Y¹ group being 2n; R⁴ may be the same or different from each other, and represent a hydrogen atom or a hydrocarbon group; and at least one among (2n+2-m) of the R⁴ is a hydrogen atom; 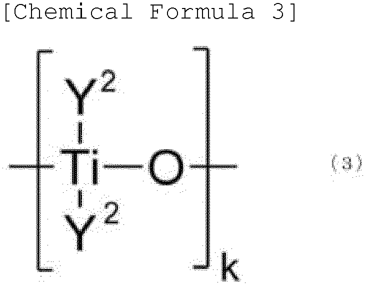 wherein, k represents an integer of 2 or more; Y² represent a hydroxy group, an alkoxy group or 1,3-dicarbonylate derived from a dicarbonyl compound (a-11) of the Chemical Formula (1); at least one among 2k of the Y² is the 1,3-dicarbonylate; and a terminal at Ti side and a terminal at O side are bonded with each other; 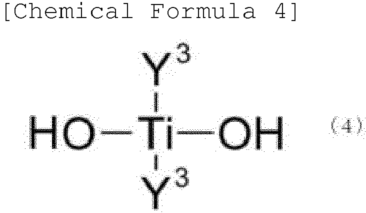 wherein, Y³ represent a hydroxy group or 1,3-dicarbonylate derived from a dicarbonyl compound (a-11) of the Chemical Formula (1); and at least one among 2 of the Y³ group is the 1,3-dicarbonylate; and 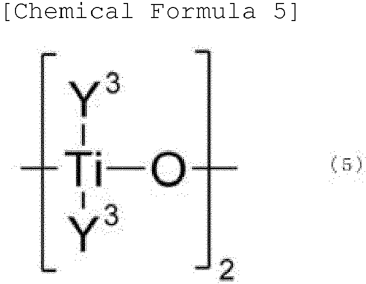 wherein, Y³ represent a hydroxy group or 1,3-dicarbonylate derived from a dicarbonyl compound (a-11) of the Chemical Formula (1); at least one among 2 of the Y³ is the 1,3-dicarbonylate; and a terminal at Ti side and a terminal at O side are bonded with each other;
wherein the dicarbonyl compound (a-11) of the Chemical Formula (1)is represented by 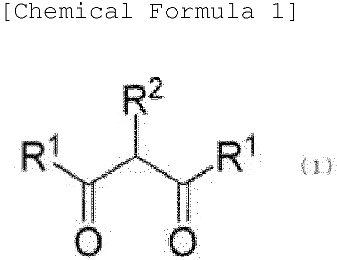 wherein, R¹ may be the same or different from each other, and represent a hydrocarbon group, an alkoxy group or a primary or secondary amino group; and R² represents a hydrogen atom or a hydrocarbon group.

2. The electrodeposition coating composition of Claim 1, wherein the titanium compound (A) is at least one type of a titanium compound represented by the Chemical Formula (4) or (5).

3. The electrodeposition coating composition of Claim 1 or 2, wherein the titanium compound (A) is at least one type of a titanium compound represented by the Chemical Formula (5-1) 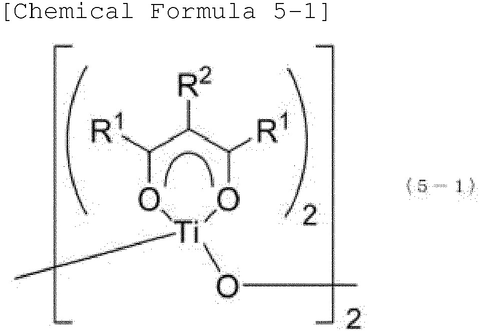 wherein, a terminal at Ti side and a terminal at O side are bonded with each other.

4. The electrodeposition coating composition of any one of Claims 1 to 3, wherein the titanium compound (A) is a titanium compound represented by the Chemical Formula (5-2) 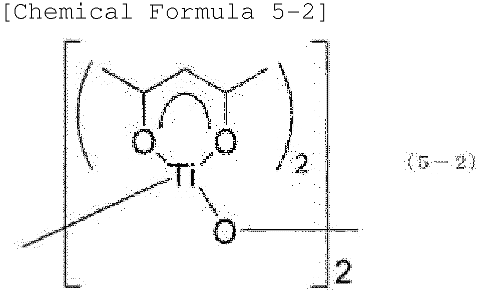 wherein, a terminal at Ti side and a terminal at O side are bonded with each other.

5. The electrodeposition coating composition of any one of Claims 1 to 4, further comprising a metal compound (D).

6. The electrodeposition coating composition of Claim 5, wherein the metal compound (D) is coated with the titanium compound (A).

7. The electrodeposition coating composition of any one of Claims 1 to 6, further comprising a filler coated with the titanium compound (A).

8. A method of producing an electrodeposition coating composition of claim 1 comprising a titanium compound (A), a base resin (B), and a neutralizer (E) for dispersing the titanium compound (A) and the base resin (B) in water, the method comprising the steps of obtaining the titanium compound (A) by allowing at least one type of a titanium complex (a-1) represented by the Chemical Formula (7) to react with water. 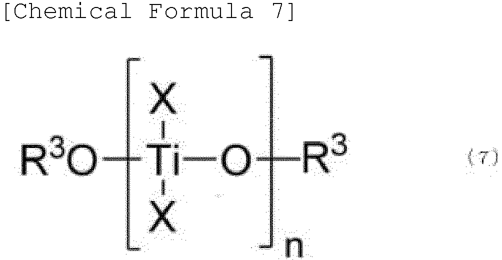 wherein, n represents an integer of 1 to 10; X represent OR³ or 1,3-dicarbonylate derived from the dicarbonyl compound (a-11) represented by the Chemical Formula (1); at least one among 2n of the X represent the 1,3-dicarbonylate; and R³ may be the same or different from each other and represent a hydrocarbon group; and
mixing the titanium compound (A), the base resin (B), and the neutralizer (E).

9. The method of Claim 8, wherein the titanium complex (a-1) is obtained by allowing at least one type of the dicarbonyl compound (a-11) represented by the Chemical Formula (1) to react with at least one type of the alkoxy titanium compound (a-12) represented by the Chemical Formula (6) 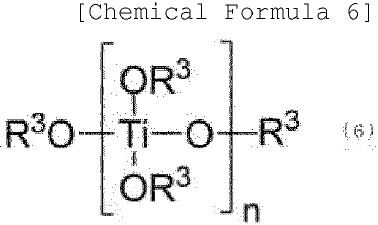
wherein, R³ may be the same or different from each other and represent a hydrocarbon group; and n represents an integer of 1 to 10, and
a molar ratio of dicarbonyl compound (a-11) / alkoxytitanium compound (a-12) is 1 to 30.

10. The method of Claim 8 or 9, wherein a molar ratio of water / titanium complex (a-1) is 1 or higher.

11. The method of any one of Claims 8 to 10, wherin the electrodeposition coating composition further comprises a metal compound (D).

12. The method of Claim 11, wherein the reaction between the titanium complex (a-1) and water is carried out in the presence of the metal compound (D).

13. The method of any one of Claims 8 to 12, wherein the reaction between the titanium complex (a-1) and water is carried out in the presence of a filler.

14. The method of any one of Claims 8 to 13, wherein either the base resin (B) has a blocked isocyanate group, or the electrodeposition coating composition contains a curing agent (C) having a blocked polyisocyanate compound.

15. The electrodeposition coating composition of any one of Claims 1 to 7, wherein either the base resin (B) has a blocked isocyanate group, or the electrodeposition coating composition contains a curing agent (C) having a blocked polyisocyanate compound.

## Patentansprüche

1. Elektrotauchlackierungszusammensetzung, umfassend eine Titanverbindung (A), ein Basisharz (B) und ein Neutralisationsmittel (E) zum Dispergieren der Titanverbindung (A) und des Basisharzes (B) in Wasser, wobei die Titanverbindung (A) mindestens eine Art einer durch die folgenden chemischen Formeln (2) bis (5) wiedergegebenen Titanverbindung ist: 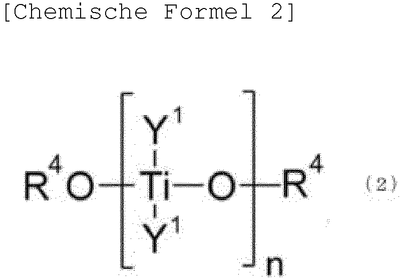 wobei n eine ganze Zahl von 1 bis 10 bedeutet; die Reste Y¹ OR⁴ oder von einer Dicarbonylverbindung (a-11) der chemischen Formel (1) abgeleitetes 1,3-Dicarbonylat bedeuten, die Anzahl der Reste Y¹, die das 1,3-Dicarbonylat bedeuten, m (1 ≤ m ≤ 2n) ist, und die Gesamtzahl der Reste Y¹ 2n ist; die Reste R⁴ gleich oder verschieden voneinander sein können und ein Wasserstoffatom oder einen Kohlenwasserstoffrest bedeuten; und mindestens ein Rest R⁴ von den (2n + 2 - m) Resten R⁴ ein Wasserstoffatom ist; 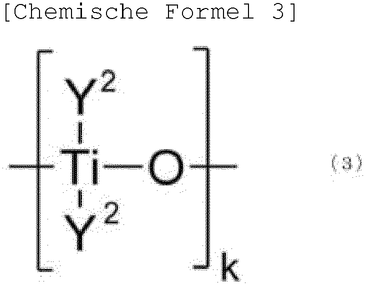 wobei k eine ganze Zahl gleich oder größer als 2 ist; die Reste Y² eine Hydroxygruppe, einen Alkoxyrest oder von einer Dicarbonylverbindung (a-11) der chemischen Formel (1) abgeleitetes 1,3-Dicarbonylat bedeuten; mindestens ein Rest Y² von den 2k Resten Y² das 1,3-Dicarbonylat ist; und ein endständiger Rest an der Ti-Seite und ein endständiger Rest an der O-Seite miteinander verbunden sind; 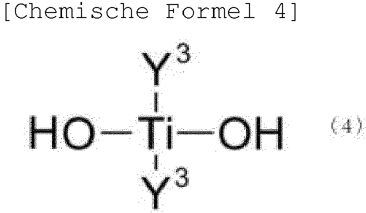 wobei die Reste Y³ eine Hydroxygruppe oder von einer Dicarbonylverbindung (a-11) der chemischen Formel (1) abgeleitetes 1,3-Dicarbonylat bedeuten; und mindestens ein Rest Y³ von den zwei Resten Y³ das 1,3-Dicarbonylat ist; und 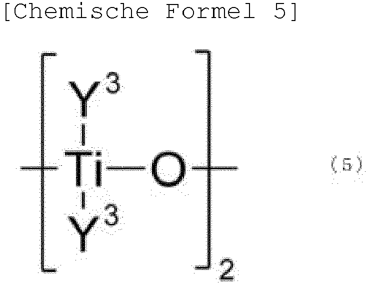 wobei die Reste Y³ eine Hydroxygruppe oder von einer Dicarbonylverbindung (a-11) der chemischen Formel (1) abgeleitetes 1,3-Dicarbonylat bedeuten; mindestens ein Rest Y³ von den zwei Resten Y³ das 1,3-Dicarbonylat ist; und ein endständiger Rest an der Ti-Seite und ein endständiger Rest an der O-Seite miteinander verbunden sind;
wobei die Dicarbonylverbindung (a-11) der chemischen Formel (1) wiedergegeben ist durch 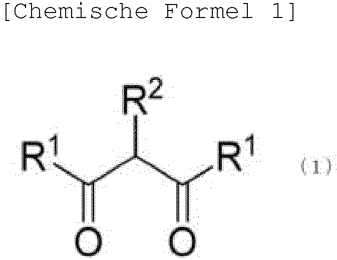 wobei die Reste R¹ gleich oder verschieden voneinander sein können und einen Kohlenwasserstoffrest, einen Alkoxyrest oder eine primäre oder sekundäre Aminogruppe bedeuten; und R² ein Wasserstoffatom oder einen Kohlenwasserstoffrest bedeutet.

2. Elektrotauchlackierungszusammensetzung nach Anspruch 1, wobei die Titanverbindung (A) mindestens eine Art einer durch die chemische Formel (4) oder (5) wiedergegebenen Titanverbindung ist.

3. Elektrotauchlackierungszusammensetzung nach Anspruch 1 oder 2, wobei die Titanverbindung (A) mindestens eine Art einer durch die chemische Formel (5-1) wiedergegebenen Titanverbindung ist, 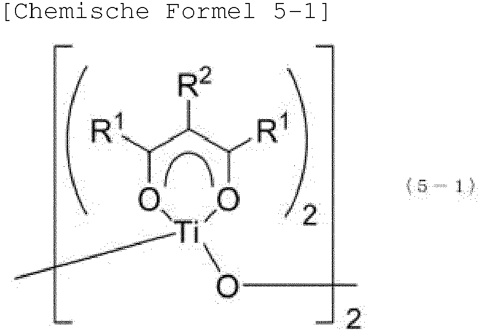 wobei ein endständiger Rest an der Ti-Seite und ein endständiger Rest an der O-Seite miteinander verbunden sind.

4. Elektrotauchlackierungszusammensetzung nach einem der Ansprüche 1 bis 3, wobei die Titanverbindung (A) eine durch die chemische Formel (5-2) wiedergegebene Titanverbindung ist, 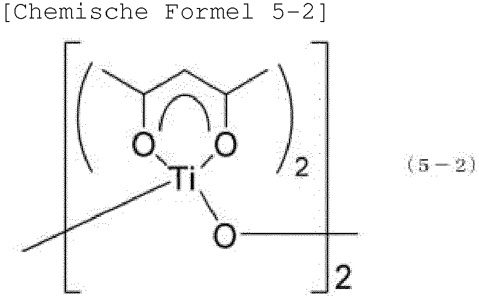 wobei ein endständiger Rest an der Ti-Seite und ein endständiger Rest an der O-Seite miteinander verbunden sind.

5. Elektrotauchlackierungszusammensetzung nach einem der Ansprüche 1 bis 4, weiterhin umfassend eine Metallverbindung (D).

6. Elektrotauchlackierungszusammensetzung nach Anspruch 5, wobei die Metallverbindung (D) mit der Titanverbindung (A) beschichtet ist.

7. Elektrotauchlackierungszusammensetzung nach einem der Ansprüche 1 bis 6, weiterhin umfassend einen mit der Titanverbindung (A) beschichteten Füllstoff.

8. Verfahren zur Herstellung einer Elektrotauchlackierungszusammensetzung nach Anspruch 1, umfassend eine Titanverbindung (A), ein Basisharz (B) und ein Neutralisationsmittel (E) zum Dispergieren der Titanverbindung (A) und des Basisharzes (B) in Wasser, wobei das Verfahren umfasst: die Schritte des Erhaltens der Titanverbindung (A) durch Reagierenlassen mindestens einer Art eines durch die chemische Formel (7) wiedergegebenen Titankomplexes (a-1) mit Wasser, 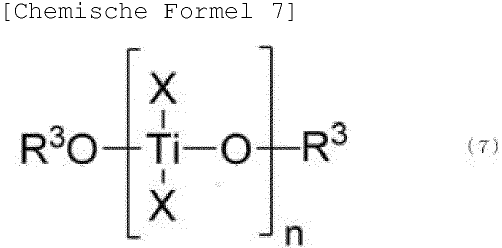 wobei n eine ganze Zahl von 1 bis 10 bedeutet; die Reste X OR³ oder von der Dicarbonylverbindung (a-11) der chemischen Formel (1) abgeleitetes 3-Dicarbonylat bedeuten; mindestens ein Rest X von den 2n Resten X das 1,3-Dicarbonylat ist; und die Reste R³ gleich oder verschieden voneinander sein können und einen Kohlenwasserstoffrest bedeuten; und
des Mischens der Titanverbindung (A), des Basisharzes (B) und des Neutralisationsmittels (E).

9. Verfahren nach Anspruch 8, wobei
der Titankomplex (a-1) erhalten wird durch Reagierenlassen mindestens einer Art der durch die chemische Formel (1) wiedergegebenen Dicarbonylverbindung (a-11) mit mindestens einer Art der durch die chemische Formel (6) wiedergegebenen Alkoxytitanverbindung (a-12), 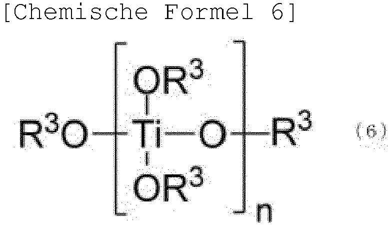 wobei die Reste R³ gleich oder verschieden voneinander sein können und einen Kohlenwasserstoffrest bedeuten; und n eine ganze Zahl von 1 bis 10 bedeutet, und
ein Molverhältnis von Dicarbonylverbindung (a-11) zu Alkoxytitanverbindung (a-12) 1 bis 30 beträgt.

10. Verfahren nach Anspruch 8 oder 9, wobei ein Molverhältnis von Wasser zu Titankomplex (a-1) gleich oder größer als 1 ist.

11. Verfahren nach einem der Ansprüche 8 bis 10, wobei die Elektrotauchlackierungszusammensetzung weiterhin eine Metallverbindung (D) umfasst.

12. Verfahren nach Anspruch 11, wobei die Reaktion zwischen dem Titankomplex (a-1) und Wasser in Gegenwart der Metallverbindung (D) durchgeführt wird.

13. Verfahren nach einem der Ansprüche 8 bis 12, wobei die Reaktion zwischen dem Titankomplex (a-1) und Wasser in Gegenwart eines Füllstoffes durchgeführt wird.

14. Verfahren nach einem der Ansprüche 8 bis 13, wobei entweder das Basisharz (B) eine blockierte Isocyanatgruppe aufweist oder die Elektrotauchlackierungszusammensetzung einen Härter (C) mit einer blockierten Polyisocyanatverbindung enthält.

15. Elektrotauchlackierungszusammensetzung nach einem der Ansprüche 1 bis 7, wobei entweder das Basisharz (B) eine blockierte Isocyanatgruppe aufweist oder die Elektrotauchlackierungszusammensetzung einen Härter (C) mit einer blockierten Polyisocyanatverbindung enthält.

## Revendications

1. Composition de revêtement par électrodéposition comprenant un composé de titane (A), une résine de base (B) et un neutralisant (E) pour disperser le composé de titane (A) et la résine de base (B) dans de l'eau,
le composé de titane (A) étant au moins un type de composé de titane représenté par les formules chimiques suivantes (2) à (5) : 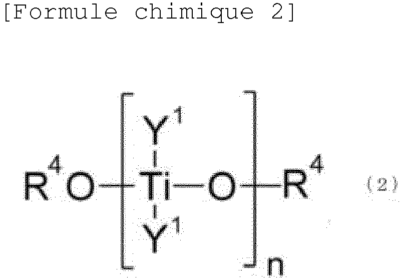 n représentant un entier de 1 à 10 ; Y¹ représentant OR⁴ ou un 1,3-dicarbonylate dérivé d'un composé dicarbonylé (a-11) de formule chimique (1), le nombre de Y¹ représentant le 1,3-dicarbonylate étant m (1≤m≤2n) et le nombre total du groupe Y¹ étant 2n ; R⁴ pouvant être le même ou différent l'un de l'autre, et représentant un atome d'hydrogène ou un groupe hydrocarboné ; et au moins un élément parmi (2n+2-m) de R⁴ étant un atome d'hydrogène ; 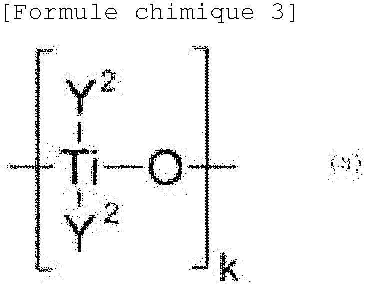 k représentant un entier de 2 ou plus ; Y² représentant un groupe hydroxyle, un groupe alcoxyle ou un 1,3-dicarbonylate dérivé d'un composé dicarbonylé (a-11) de formule chimique (1) ; au moins un parmi 2k de Y² étant le 1,3-dicarbonylate ; et un groupe terminal du côté Ti et un groupe terminal du côté 0 étant liés l'un à l'autre ; 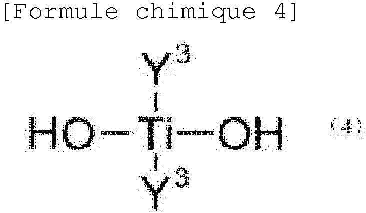 Y³ représentant un groupe hydroxyle ou un 1,3-dicarbonylate dérivé d'un composé dicarbonylé (a-11) de formule chimique (1) ; et au moins un élément parmi 2 de Y³ étant le 1,3-dicarbonylate ; et 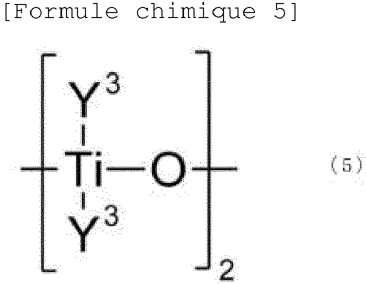 Y³ représentant un groupe hydroxyle ou un 1,3-dicarbonylate dérivé d'un composé dicarbonylé (a-11) de formule chimique (1) ; au moins un parmi 2 de Y³ étant le 1,3-dicarbonylate ; et un groupe terminal du côté Ti et un groupe terminal du côté 0 étant liés l'un à l'autre ; le composé dicarbonylé (a-11) de formule chimique (1) étant représenté par 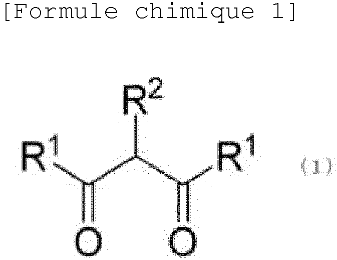 R¹ pouvant être le même ou différent l'un de l'autre, et représentant un groupe hydrocarboné, un groupe alcoxyle ou un groupe aminé primaire ou secondaire ; et R² représentant un atome d'hydrogène ou un groupe hydrocarboné.

2. Composition de revêtement par électrodéposition selon la revendication 1, le composé de titane (A) étant au moins un type de composé de titane représenté par les formules chimiques (4) ou (5).

3. Composition de revêtement par électrodéposition selon la revendication 1 ou 2, le composé de titane (A) étant au moins un type de composé de titane représenté par la formule chimique (5-1) 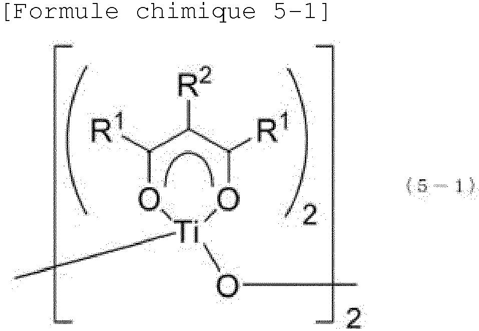 un groupe terminal du côté Ti et un groupe terminal du côté O étant liés l'un à l'autre.

4. Composition de revêtement par électrodéposition selon l'une quelconque des revendications 1 à 3, le composé de titane (A) étant un type de composé de titane représenté par la formule chimique (5-2) 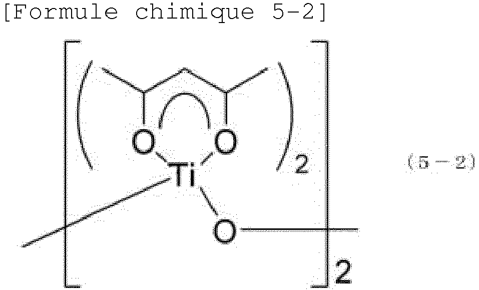 un groupe terminal du côté Ti et un groupe terminal du côté O étant liés l'un à l'autre.

5. Composition de revêtement par électrodéposition selon l'une quelconque des revendications 1 à 4, comprenant en outre un composé de métal (D).

6. Composition de revêtement par électrodéposition selon la revendication 5, le composé de métal (D) étant revêtu du composé de titane (A).

7. Composition de revêtement par électrodéposition selon l'une quelconque des revendications 1 à 6, comprenant en outre un produit de remplissage revêtu du composé de titane (A).

8. Méthode de production d'une composition de revêtement par électrodéposition selon la revendication 1 comprenant un composé de titane (A), une résine de base (B) et un neutralisant (E) pour disperser le composé de titane (A) et la résine de base (B) dans de l'eau, la méthode comprenant les étapes d'obtenir le composé de titane (A) en faisant réagir avec de l'eau au moins un type de complexe de titane (a-1) représenté par la formule chimique (7). 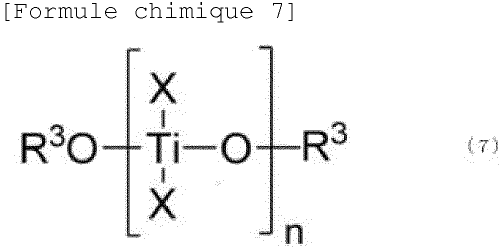 n représentant un entier de 1 à 10 ; X représentant OR³ ou un 1,3-dicarbonylate dérivé d'un composé dicarbonylé (a-11) représenté par la formule chimique (1) ; au moins un élément parmi 2n du X représentant le 1,3-dicarbonylate ; et R³ pouvant être le même ou différent l'un de l'autre et représentant un groupe hydrocarboné ; et
mélanger le composé de titane (A), la résine de base (B) et le neutralisant (E).

9. Méthode de la revendication 8,
le complexe de titane (a-1) étant obtenu en faisant réagir au moins un type du composé dicarbonylé (a-11) représenté par la formule chimique (1) avec au moins un type du composé de titane alcoxy (a-12) représenté par la formule chimique (6) 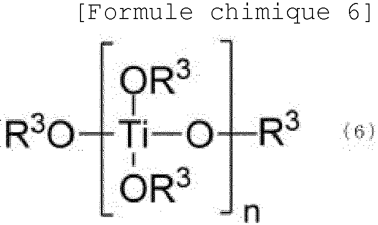 R³ pouvant être le même ou différent l'un de l'autre et représentant un groupe hydrocarboné ; et n représentant un entier de 1 à 10, et
un rapport molaire composé dicarbonylé (a-11)/composé d'alcoxytitane (a-12) étant de 1 à 30.

10. Méthode selon la revendication 8 ou 9, un rapport molaire eau/complexe de titane (a-1) étant 1 ou supérieur à 1.

11. Méthode selon l'une des revendications 8 à 10, la composition de revêtement par électrodéposition comprenant en outre un composé de métal (D).

12. Méthode de la revendication 11, la réaction entre le complexe de titane (a-1) et l'eau étant réalisée en présence du composé de métal (D).

13. Méthode selon l'une des revendications 8 à 12, la réaction entre le complexe de titane (a-1) et l'eau étant réalisée en présence d'un produit de remplissage.

14. Méthode selon l'une quelconque des revendications 8 à 13, la résine de base (B) ayant un groupe isocyanate bloqué ou la composition de revêtement par électrodéposition contenant un agent de traitement (C) ayant un composé polyisocyanate bloqué.

15. Composition de revêtement par électrodéposition selon l'une quelconque des revendications 1 à 7, la résine de base (B) ayant un groupe isocyanate bloqué ou la composition de revêtement par électrodéposition contenant un agent de traitement (C) ayant un composé polyisocyanate bloqué.
